(19) Europäisches Patentamt / European Patent Office / Office européen des brevets

(11) **EP 2 600 302 A1**

(12) **EUROPEAN PATENT APPLICATION**
published in accordance with Art. 153(4) EPC

(43) Date of publication:
05.06.2013 Bulletin 2013/23

(51) Int Cl.:
*G06Q 50/00* (2012.01)    *H04W 60/00* (2009.01)

(21) Application number: 11812630.9

(86) International application number:
PCT/JP2011/067497

(22) Date of filing: 29.07.2011

(87) International publication number:
WO 2012/015041 (02.02.2012 Gazette 2012/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.09.2010 JP 2010221456
29.07.2010 JP 2010170486

(71) Applicant: **NTT DOCOMO, INC.**
**Chiyoda-ku**
**Tokyo**
**100-6150 (JP)**

(72) Inventors:
• **ODAWARA Toru**
**Tokyo 100-6150 (JP)**
• **OYABU Yuki**
**Tokyo 100-6150 (JP)**
• **NAGATA Tomohiro**
**Tokyo 100-6150 (JP)**
• **OKAJIMA Ichiro**
**Tokyo 100-6150 (JP)**
• **TERADA Masayuki**
**Tokyo 100-6150 (JP)**

(74) Representative: **Viering, Jentschura & Partner**
**Am Brauhaus 8**
**01099 Dresden (DE)**

(54) **INFORMATION ANALYSIS DEVICE AND INFORMATION ANALYSIS METHOD**

(57) An information analysis device includes: a receiving unit for receiving a location registration signal including a sector ID, location registration time information and a user ID subjected to location registration; an extracting unit for extracting a location registration signal of which the location registration time is immediately preceding a target time and a location registration signal of which the location registration time is immediately following the target time, from the location registration signal for each user; and a population distribution calculation unit for calculating population distribution by sector at the target time based on location registration time information and a location corresponding to the sector ID in the location registration signal immediately preceding the target time for each user, location registration time information and a location corresponding to the sector ID in the location registration signal immediately following the target time for each user, and the target time.

**Fig.2**

EP 2 600 302 A1

**Description**

**Technical Field**

The present invention relates to an information analysis device and an information analysis method for determining population distribution.

**Background Art**

Censuses have been conventionally conducted on a 5-year cycle as a method for collecting data on macroscopic population distribution. This type of survey requires a series of extremely time-consuming activities such as distributing questionnaires to those surveyed, collecting them, and tallying them with many workers, thereby requiring time to obtain the survey results. For those surveyed and who responded, too, this survey imposes burdens such as filling out and sending the questionnaires.

**Citation List**

**Patent Literature**

Patent Literature 1: Japanese Patent Application Laid-open Publication No. 2003-44969

**Summary of Invention**

**Technical Problem**

As described above, conventionally, even only collecting data on macroscopic population distribution is very troublesome, and it is thus difficult to collect the data easily and quickly and obtain the survey results.
As an attempt to obtain population distribution using mobile terminals, in Patent Literature 1, for example, obtaining the distribution of population using mobile terminals with a GPS function is described. This technique requires a processing load and time for distributing, to all users to be surveyed, GPS built-in devices including identifiers allowing all the users to be uniquely identifiable, collecting information of a location located by a GPS from one by one, and the like, to thereby obtain population distribution. Accordingly, a technique of easily and quickly collecting data regarding population distribution and investigating them has been expected. It is needless to say that a certain level of accuracy or higher is required for the collected data. The above-mentioned case using a GPS function cannot always obtain location information at an exact target time at which population distribution is desired to be determined.
The present invention is aimed at easily and quickly collecting high-precision data regarding macroscopic population distribution in view of the problem described above.

**Solution to Problem**

To achieve the above-described aim, the applicant of the present invention has filed a Japanese patent application (Patent Application No. 2009-92225) and an International Patent Application (PCT/JP2010/055424) on inventions of derivation of population distribution using location registration signals. The applicant has further improved the inventions of derivation of population distribution using location registration signals, and has achieved the present invention that has improved the inventions from a new point of view.
An information analysis device according to one aspect of the present invention includes a receiving unit for receiving a location registration signal including a sector ID, location registration time information and a user ID subjected to location registration, from the outside, an extracting unit for extracting a location registration signal of which the location registration time is immediately preceding a target time and a location registration signal of which the location registration time is immediately following the target time, from the location registration signal for each user, and a population distribution calculation unit for calculating population distribution by sector at the target time based on location registration time information and a location corresponding to the sector ID included in the location registration signal immediately preceding the target time for each user, location registration time information and a location corresponding to the sector ID included in the location registration signal immediately following the target time for each user, and the target time. The "target time" in the present invention means a time at which population distribution should be determined.
The information analysis device, when the receiving unit receives a location registration signal including a sector ID, location registration time information, and a user ID, the extracting unit extracts a location registration signal of which the location registration time is immediately preceding a target time and a location registration signal of which the location registration time is immediately following the target time, from the location registration signal for each user. The population distribution calculation unit calculates population distribution by sector at the target time based on location registration time information and a location corresponding to the sector ID included in the location registration signal immediately preceding the target time for each user, location registration time information and a location corresponding to the sector ID included in the location registration signal immediately following the target time for each user, and the target time. The target users may be all users who received location registration signals, or may be ones limited in accordance with attribute information (for example, age, gender, and address) out of them.

As described above, based on the location registration signal immediately preceding and immediately following a target time for each user, population distribution by sector is calculated at the target time, thereby allowing high-precision data regarding macroscopic population distribution to be easily and quickly collected. Since the population distribution by sector at the target time is calculated not based on the occurrence number of the location registration signal, but based on the location registration signal immediately preceding and immediately following the target time for each user, the population distribution by sector at the target time can be calculated with high precision from the location registration signal of which the generating time interval fluctuates. In addition, inconvenience that is expected when the occurrence number of the location registration signal is based (for example, inconvenience caused by considerably more location registration signals than an actual population figure occurring in the vicinity of a location registration area boundary) can be prevented.

The population distribution calculation unit can calculate population distribution by sector at a target time more specifically as follows. For example, the population distribution calculation unit calculates a first time difference between an immediately preceding location registration time and the target time and a second time difference between an immediately following location registration time and the target time, for each user, calculates a weight of an immediately preceding location registration signal and a weight of an immediately following location registration signal based on the first time difference and the second time difference for each user, and tallies by sector the weight of the immediately preceding location registration signal and the weight of the immediately following location registration signal for all users to be tallied. In the present invention, the "weight of a location registration signal" means a probability that a user is located in a sector related to the location registration signal at a target time. Since there is not necessarily a location registration signal that is at exactly a target time actually, the weight of the location registration signal is calculated so that the shorter the time difference between the location registration time of the location registration signal and the target time, the larger the probability that the user is located in the sector related to the location registration signal (that is, the weight of the location registration signal). For example, the population distribution calculation unit may calculate a value obtained by dividing the second time difference by the sum of the first time difference and the second time difference, as the weight of the immediately preceding location registration signal and calculate a value obtained by dividing the first time difference by the sum of the first time difference and the second time difference, as the weight of the immediately following location registration signal. For example, when the weight of the immediately preceding location registration signal was calculated to be 0.4, while the weight of the immediately following location registration signal was calculated to be 0.6 with respect to a certain user, it means that the user is located in the sector related to the immediately preceding location registration signal with a probability of "0.4" and the user is located in the sector related to the immediately following location registration signal with a probability of "0.6" at the target time. In other words, it can be regarded that "0.4 people" is located in the sector related to the immediately preceding location registration signal, while "0.6 people" is located in the sector related to the immediately following location registration signal with respect to the user. Such calculations of the weights of the immediately preceding and immediately following location registration signals are performed for each user, and the weight of the immediately preceding location registration signal and the weight of the immediately following location registration signal for all users to be tallied are tallied for each sector, thereby allowing the population distribution by sector at the target time with respect to all users to be tallied to be calculated.

When at least one of the first time difference and the second time difference is longer than a preset reference value, the population distribution calculation unit may set the weight of a location registration signal corresponding to a time difference longer than the reference value to be 0. As the "reference value", for example, the period of periodic location registration (54 minutes) may be adopted, and considering a case in which periodic location registration occurs during communication, a time set to be longer than the period of the periodic location registration (54 minutes) may be adopted, and further, the mean location registration interval of all users to be tallied may be adopted. When only one of the first time difference and the second time difference is longer than the reference value, the population distribution calculation unit may set the weight of a location registration signal corresponding to a time difference not longer than the reference value to be 1, and as another aspect, the population distribution calculation unit may calculate a value obtained by dividing the difference between the reference value and the time difference not longer than the reference value by the reference value, as the weight of the location registration signal corresponding to the time difference not longer than the reference value.

The extracting unit may extract, out of the location registration signals for each user, an immediately preceding pre-removal location registration signal which is a location registration signal of which the location registration time is immediately preceding the target time, and an immediately following pre-removal location registration signal which is a location registration signal of which the location registration time is immediately following the target time, from a location registration signal before removing a location registration signal generated caused by the fact that a terminal has crossed a boundary between location registration areas and extract, out of the location registration signals for each user, an immediately preceding post-removal location registration signal which is a location registration signal of which the location registration time is immediately preceding the target time, and an immediately following post-removal location registration signal which is a location registration signal of which the location registration time is immediately following the target time, from a location registration signal after removing a location registration signal generated caused by the fact that a terminal has crossed a boundary between location registration areas. The population distribution calculation unit may calculate a first time difference between the location registration time of the immediately preceding pre-removal location registration signal and the target time, a second time difference between the location registration time of the immediately following pre-removal location registration signal and the target time, a third time difference between the location registration time of the immediately preceding post-removal location registration signal and the target time, and a fourth time difference between the location registration time of the immediately following post-removal location registration signal and the target time, for each user, calculate the weight of the immediately preceding pre-removal location registration signal and the weight of the immediately following pre-removal location registration signal based on the first time difference and the second time difference, calculate the weight of the immediately preceding post-removal location registration signal and the weight of the immediately following post-removal location registration signal based on the third time difference and the fourth time difference, for each user, divide proportionally the weights of the immediately preceding and immediately following pre-removal location registration signals and the weights of the immediately preceding and immediately following post-removal location registration signals based on a preset proportional division parameter, for each user, and tally the weights of the proportionally divided immediately preceding and immediately following pre-removal location registration signals and the weights of the proportionally divided immediately preceding and immediately following post-removal location registration signals for all users to be tallied for each sector.

When both the immediately preceding pre-removal location registration signal and the immediately following pre-removal location registration signal extracted by the extracting unit are not the location registration signal generated caused by the fact that the terminal has crossed a boundary between location registration areas, the immediately preceding pre-removal location registration signal and the immediately following post-removal location registration signal become the same, while the immediately following pre-removal location registration signal and the immediately following post-removal location registration signal become the same. In this case, therefore, the extraction of the immediately preceding and immediately following post-removal location registration signals, the extraction of the third and fourth time differences related to the immediately preceding and immediately following post-removal location registration signals, weight calculation for each of the immediately preceding and immediately following post-removal location registration signals, and the division processing based on the division parameter become unnecessary. In this case, the population distribution calculation unit may calculate population distribution by sector at the target time by calculating a first time difference between the location registration time of the immediately preceding pre-removal location registration signal and the target time and a second time difference between the location registration time of the immediately following pre-removal location registration signal and the target time for each user, calculating the weight of the immediately preceding location registration signal and the weight of immediately following location registration signal based on the first time difference and the second time difference for each user, and tallying the weights of the immediately preceding location registration signals and the weights of the immediately following location registration signals for all users to be tallied for each sector.

As another aspect, the population distribution calculation unit may calculate population distribution by sector at a target time by generating a plurality of points corresponding to transit points at predetermined time intervals when moving with constant velocity from an immediately preceding location registration time to an immediately following location registration time on a line connecting between a location corresponding to a sector ID included in a location registration signal immediately preceding the target time and a location corresponding to a sector ID included in a location registration signal immediately following the target time for each user, and generating a virtual location registration signal for a sector in which the generated point is included for each user, extracting the location registration signal at the target time from the virtual location registration signals for all target users (hereinafter referred to as "all users to be tallied"), and tallying the number of extracted location registration signals at the target time for each sector.

As still another aspect, the population distribution calculation unit may calculate population distribution by sector at a target time by generating a plurality of points corresponding to transit points at predetermined time intervals when moving with constant velocity from an immediately preceding location registration time to an immediately following location registration time on a line connecting between a location corresponding to a sector ID included in a location registration signal immediately preceding the target time and a location corresponding to a sector ID included in a location registration signal immediately following the target time for each user, generating a virtual location registration signal for a sector in which the generated point is included, and tallying the number of generated location registration signals at the target time for each sector.

As still another aspect, the population distribution calculation unit may calculate population distribution by sector at a target time by: generating, based on a ratio correlated to the inter-area relative ratio of intra-area moving velocities in an area of which the boundary can be associated with sector boundaries, a plurality of points corresponding to transit points at predetermined time intervals when moving from an immediately preceding location registration time to an immediately following location registration time on a line connecting between a location corresponding to a sector ID included in a location registration signal immediately preceding the target time and a location corresponding to a sector ID included in a location registration signal immediately following the target time for each user, and generating a virtual location registration signal for a sector in which the generated point is included for each user, extracting the location registration signal at the target time from the virtual location registration signals for all users to be tallied, and tallying the number of extracted location registration signals at the target time for each sector.

As still another aspect, the population distribution calculation unit may calculate population distribution by sector at a target time by: generating, based on a ratio correlated to the inter-area relative ratio of intra-area moving velocity in an area of which the boundary can be associated with a sector boundary, a plurality of points corresponding to transit points at predetermined time intervals when moving from an immediately preceding location registration time to an immediately following location registration time on a line connecting between a location corresponding to a sector ID included in a location registration signal immediately preceding the target time and a location corresponding to a sector ID included in a location registration signal immediately following the target time for each user, generating a virtual location registration signal for a sector in which the point corresponding to the target time is included for each user, and tallying the number of generated location registration signals at the target time for each sector.

As still another aspect, the population distribution calculation unit may calculate population distribution by sector at a target time by calculating a first time difference between the immediately preceding location generation time and the target time and a second time difference between the immediately following location registration time and the target time for each user, calculating the weight of an immediately preceding location registration signal and the weight of an immediately following location registration signal based on the first time difference and the second time difference for each user, and tallying the weight of the immediately preceding location registration signal and the weight of the immediately following location registration signal for all users to be tallied for each sector. The population distribution calculation unit in this aspect may calculate a value obtained by dividing the second time difference by the sum of the first time difference and the second time difference as the weight of the immediately preceding location registration signal and calculate a value obtained by dividing the first time difference by the sum of the first time difference and the second time difference as the weight of the immediately following location registration signal.

The information analysis device may further include an attribute information holding unit holding attribute information for each user, and the extracting unit may limit target users in accordance with the attribute information and perform the extraction of the immediately preceding and immediately following location registration signals for the limited target users.

As another aspect, the information analysis device may further include an attribute information holding unit holding attribute information for each user, and the population distribution calculation unit may limit target users in accordance with the attribute information and perform the calculation of population distribution by sector at the target time for the limited target users.

The above-described invention of the information analysis device is regarded as an invention of an information analysis method performed by an information analysis device and can be described as follows.

An information analysis method according to one aspect of the present invention is an information analysis method performed by an information analysis device and includes a receiving step of receiving a location registration signal including a sector ID, location registration time information and a user ID subjected to location registration, from the outside, an extracting step of extracting a location registration signal of which the location registration time is immediately preceding a target time and a location registration signal of which the location registration time is immediately following the target time, from the location registration signal for each user, and a population distribution calculating step of calculating population distribution by sector at the target time based on location registration time information and a location corresponding to the sector ID included in the location registration signal immediately preceding the target time for each user, location registration time information and a location corresponding to the sector ID included in the location registration signal immediately following the target time for each user, and the target time.

The applicant further expanded an invention of derivation of population distribution using location registration signals and has achieved the following invention that can be widely applied to derivation of population distribution using point data including location information indicating the location of a user, locating time information at which the location information was obtained, and a user ID.

An information analysis device according to one aspect of the present invention includes a receiving unit for receiving point data including the location of a user, locating time information at which the location information was obtained, and a user ID, an extracting unit for extracting point data of which the locating time is immediately preceding a target time and point data of which the locating time is immediately following the target time, from the point data for each user, and a population distribution calculation unit for estimating the location of a user at the target time by complementing the midway between a location indicated by the point data immediately preceding the target time and a location indicated by the point data immediately following the target time for each user and calculating population distribution by predetermined areas to be calculated at the target time based on the estimated location of each user.

In the information analysis device, when the receiving unit receives the point data including the location of a user, locating time information at which the location information was obtained, and a user ID from the outside, the extracting unit extracts the point data of which the locating time is immediately preceding the target time and the point data of which the locating time is immediately following the target time, from the point data for each user, and the population distribution calculation unit estimates the location of a user at the target time by complementing the midway between a location indicated by the point data immediately preceding the target time and a location indicated by the point data immediately following the target time for each user and calculates population distribution by predetermined areas to be calculated at the target time based on the estimated location of each user.

As described above, based on the point data immediately preceding the target time and the point data immediately following the target time for each user, population distribution by predetermined areas to be calculated at the target time is calculated, thereby allowing high-precision data regarding macroscopic population distribution to be easily and quickly collected. Population distribution by predetermined areas to be calculated at a target time can be calculated from point data of which the generating time interval fluctuates. As the predetermined areas to be calculated, various areas may be adopted including a sector, a mesh, a numbered subdivision of a town, and a local government.

The population distribution calculation unit can calculate population distribution more specifically as follows. For example, the population distribution calculation unit may generate a plurality of points corresponding to transit points at predetermined time intervals when moving from an immediately preceding locating time to an immediately following locating time on a line connecting between a location indicated by location information included in point data immediately preceding a target time and a location indicated by location information included in point data immediately following the target time for each user, estimate a point corresponding to the target time as the location of the user at the target time, and based on the estimated location of each user, and calculate the population distribution by predetermined areas to be calculated at a target time.

For generating a plurality of points corresponding to transit points at predetermined time intervals, the population distribution calculation unit determines, based on moving characteristics of a user in a generation area in which the points are to be generated, the intervals of the points in the generation area. The moving characteristics of the user in the generation area may be the mean moving velocity of the user in the generation area or the mean staying time of the user in the generation area. The generation area may be the same as the area to be calculated or be different therefrom.

The information analysis device may further include an attribute information holding unit holding attribute information for each user, and the extracting unit may limit target users in accordance with the attribute information and extract the point data immediately preceding and immediately following the target time for the limited target users.

As another aspect, the information analysis device may further include an attribute information holding unit holding attribute information for each user, and the population distribution calculation unit may limit target users in accordance with the attribute information and calculate population distribution by predetermined areas to be calculated at the target time for the limited target users.

The population distribution calculation unit may calculate the population distribution on a further basis of a scaling factor for converting the number of terminals of users into population. The information analysis device may further include a target time input unit for inputting a target time, and may further include an output unit for outputting the population distribution information calculated.

The above-described invention of the information analysis device is regarded as an invention of an information analysis method performed by an information analysis device and can be described as follows. An information analysis method according to one aspect of the present invention is an information analysis method performed by an information analysis device and includes a receiving step of receiving point data including location information indicating the location of a user, locating time information obtained from the location information, and a user ID from the outside, an extracting step of extracting point data of which the locating time is immediately preceding a target time and point data of which the locating time is immediately following the target time, from point data for each user, and a population distribution calculating step of estimating the location of the user at the target time by complementing the midway between a location indicated by the point data immediately preceding the target time and a location indicated by the point data immediately following the target time for each user and calculating population distribution by predetermined areas to be calculated at the target time based on the estimated location of each user.

**Advantageous Effects of Invention**

According to the present invention, based on the point data immediately preceding the target time and the point data immediately following the target time for each user, population distribution by predetermined areas to be calculated at the target time is calculated, thereby allowing high-precision data regarding macroscopic population distribution to be easily and quickly collected.

When using the location registration signal as the point data, in particular, based on the location registration signal immediately preceding a target time and the location registration signal immediately following the target time for each user, population distribution by sector is calculated at the target time, thereby allowing high-precision data regarding macroscopic population distribution to be easily and quickly collected. Since the population distribution by sector at the target time is calculated not based on the occurrence number of the location registration signal, but based on the location registration signal immediately preceding the target time and the location registration signal immediately following the target time for each user, the population distribution by sector at the target time can be calculated with high precision from the location registration signal of which the generating time interval fluctuates. In addition, inconvenience that is expected when the occurrence number of the location registration signal is used as a basis (for example, inconvenience caused by considerably more location registration signals than an actual population figure occurring in the vicinity of a location registration area boundary) can be prevented.

**Brief Description of Drawings**

Fig. 1 is a diagram illustrating a system structure of a communication system according to first and second embodiments of the present invention.
Fig. 2 is a diagram illustrating a functional structure of the communication system in Fig. 1.
Fig. 3 is diagram illustrating a relationship between a BTS and sectors.
Fig. 4 is a flowchart illustrating the processing of the first embodiment.
Fig. 5 is a flowchart illustrating the complementary processing of a location registration signal for each user in the first embodiment.
Fig. 6 is a diagram for explaining a point generation method in the first embodiment.
Fig. 7 is a diagram illustrating an example of population distribution output in the first embodiment.
Fig. 8 is a flowchart illustrating the processing of the second embodiment.
Fig. 9 is a flowchart illustrating the weight calculation processing of a location registration signal for each user.
Fig. 10 is a diagram for explaining a weight calculation method.
Fig. 11 is a diagram illustrating an example of population distribution output in the second embodiment.
Fig. 12 is a diagram illustrating an example of a population distribution diagram representing population distribution by sector and population distribution by location registration areas.
Fig. 13 is a diagram illustrating the system structure of a communication system of the seventh embodiment.
Fig. 14 is a flowchart illustrating an alternative example of the processing in Fig. 5.
Fig. 15 is a diagram illustrating an alternative example of the functional structure in Fig. 2.
Fig. 16 is a flowchart illustrating the complementary processing of a location registration signal for each user in the third embodiment.
Fig. 17 is a diagram for explaining the first example of the point generation method in the third embodiment.
Fig. 18 is a flowchart illustrating an alternative example of the processing in Fig. 16.
Fig. 19 is a diagram for explaining a method of determining a mean moving velocity.
Fig. 20 is a diagram for explaining the second example of the point generation method in the third embodiment.
Fig. 21 is diagram for explaining a method of determining a mean staying time.
Fig. 22 is a flowchart illustrating weight calculation processing in the fourth embodiment.
Fig. 23 is a diagram for explaining weight calculation processing in the fourth and fifth embodiments.
Fig. 24 is a diagram for explaining weight calculation processing in the fifth embodiment.
Fig. 25 is flowchart for explaining weight calculation processing and weight tallying processing in the sixth embodiment.
Fig. 26 is a diagram for explaining weight calculation processing and weight tallying processing in the sixth embodiment.
Fig. 27 is a diagram for explaining a combination of a mesh and an area diagram.
Fig. 28 is a diagram for explaining the calculation of the area and area ratio of each divided area.
Fig. 29 is a diagram for explaining the calculation of the sum of population in a divided area within a mesh.
Fig. 30 is a diagram for explaining conversion processing in an environment in which the communication area of interior stations and a plurality of communication areas of exterior stations utilizing frequency bands having different radio coverage exist in a geographically overlapped manner.
Fig. 31 is a diagram illustrating an output example in which estimated population in each sector and population by attributes including gender, age group, and address are output.

## Description of Embodiments

With reference to the attached drawings, embodiments of the present invention will be described. When possible, like reference numerals are given to like parts, and redundant explanations will be omitted.

[First Embodiment]

[Structure of Communication System]

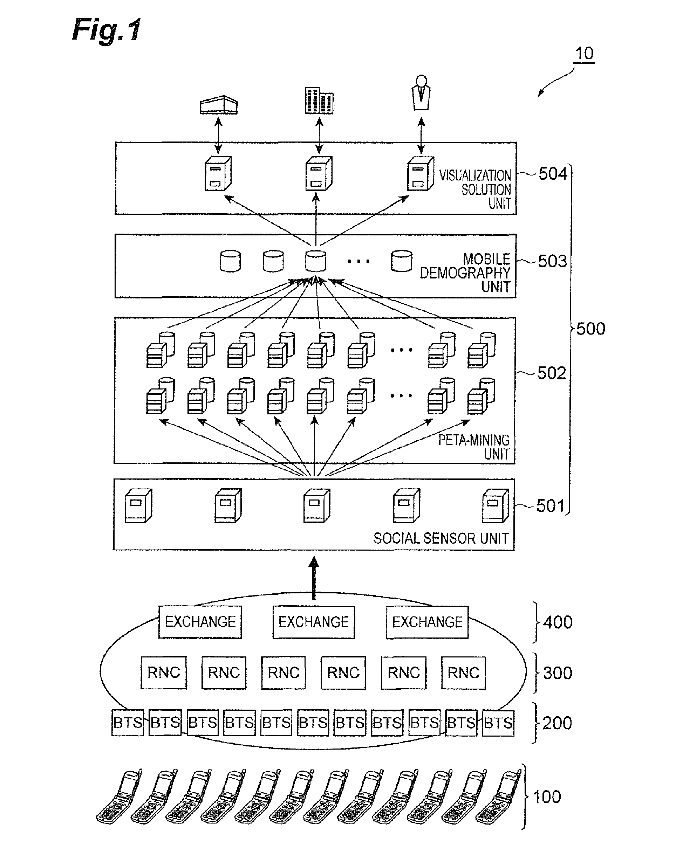

FIG. 1 is a diagram illustrating a system structure of a communication system 10 according to a first embodiment of the present invention. As illustrated in FIG 1, the communication system 10 is configured to include mobile stations 100, base transceiver stations (BTSs) 200, radio network controllers (RNCs) 300, exchanges 400, and a management center 500. The management center 500 includes social sensor units 501, peta-mining units 502, mobile demography units 503, and visualization solution units 504.

The RNCs 300 receive location registration signals that the mobile stations 100 transmit through the BTSs 200 and counts the number of the location registration signals. It should be noted that according to the standard specification "Radio Resource Control (RRC) Protocol Specification: 3GPP TS 25.331", signal-counting by sector is specified in the RNCs 300, and the present method conforms thereto.

Specifically, for example, an RRC Connection Request signal with a parameter "Registration" may be measured. Alternatively, higher-level signal may be measured.

The exchanges 400 collect, through the BTSs 200 and the RNCs 300, location registration signals that mobile stations 100 transmit. While the RNCs 300 count the number of location registration signals by sector, the exchanges 400 manage the mobile stations 100 by location registration areas, and grasp and store therein the number of mobile stations 100 registered in location registration areas by collecting location registration signals that the mobile stations transmit. The exchanges 400 output the number of the mobile stations 100 registered in the location registration areas (the registration number) to the management center 500 at a predetermined timing or in response to a request from the management center 500.

The management center 500 is, as described above, configured to include the social sensor units 501, the peta-mining units 502, the mobile demography units 503, and the visualization solution units 504 and, in each unit, a statistical processing is performed by using location registration signals and information regarding transmission and reception that mobile stations 100 transmit.

Each of the social sensor units 501 is a server device that collects data stored in the exchanges 400, including the number of mobile stations 100 registered in location registration areas from each exchange 400. The social sensor unit 501 is configured to receive data that is output periodically from the exchanges 400, and to obtain the data from the exchanges 400 in accordance with a timing that is predetermined in the social sensor unit 501.

Each of the peta-mining units 502 is a server device that converts data received from the social sensor unit 501 into a predetermined data format. For example, the peta-mining unit 502 performs sorting processing, using user IDs as keys, or by areas.

Each of the mobile demography units 503 is a server device that performs a tallying process for data processed in the peta-mining unit 502, in other words, counting processing for each item. For example, the mobile demography unit 503 can perform processing such as derivation of population distribution using the location registration signals as described below.

Each of the visualization solution units 504 is a server device that processes data tallied in the mobile demography unit 503 so as to make the data visible. For example, the visualization solution unit 504 can perform a mapping of the tallied data onto a map. This data processed in the visualization solution units 504 is provided to companies, public offices, individuals, or the like, and is used for store development, road traffic research, disaster measures, environmental measures, or the like. However, information thus statistically processed is, as might be expected, processed so that individuals or the like are not identified so as not to violate privacy.

All of the social sensor unit 501, the peta-mining unit 502, the mobile demography unit 503, and the visualizing solution unit 504 are configured with server devices as described above, and their depictions are omitted, but it is needless to say that they include basic components of a conventional information processing apparatus (i.e., a CPU, a RAM, a ROM, input devices such as a keyboard and a mouse, a communication device that communicates with the outside, a storage device that stores therein information, and output devices such as a display and a printer).

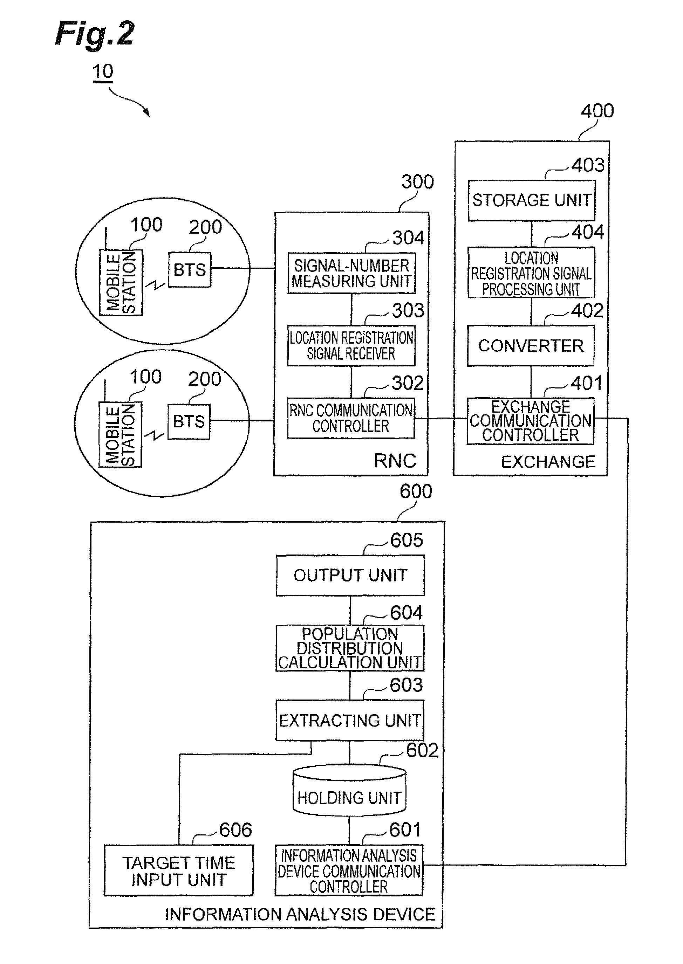

Fig. 2 illustrates a functional structure of the communication system 10. As illustrated in Fig. 2, the communication system 10 is configured to include a plurality of mobile stations 100 located in sectors that a plurality of BTSs 200 control, the RNC 300 that controls the BTSs 200, the exchange 400, and an information analysis device 600. The information analysis device 600 corresponds to the mobile demography unit 503 and the visualization solution unit 504 depicted in Fig. 1. With respect to functions corresponding to the social sensor unit 501 and the peta-mining unit 502 in Fig. 1, their depictions regarding the functions are omitted in Fig. 2.

First, the RNC 300 will be explained. The RNC 300 is configured to include an RNC communication controller 302, a location registration signal receiver 303, and a signal-number measuring unit 304. The RNC communication controller 302 is a component that performs communication connection with the mobile stations 100 through the BTSs 200 and, for example, performs communication connection processing based on a transmission process from the mobile station 100 and communication connection processing based on location registration requests. In the present embodiment, the mobile station 100 transmits a location registration signal as a signal for requesting location registration to a location registration area at constant intervals (for example, 54 minutes) at times such as when the mobile station 100 has crossed a boundary between location registration areas as a unit area when requesting location registration, when performing attach processing for registering the mobile station 100 to a network by turning on the mobile station 100, etc., when performing detach processing for deleting the registered state of the mobile station 100 by turning off the mobile station 100, etc.. In the present embodiment, furthermore, the RNC communication controller 302 can transmit an Initial UE Message used for communication connection processing to the exchange 400. This Initial UE Message includes instruction information (a location registration signal) indicating a transmission or a location registration request and an ID such as a temporary ID that uniquely specifies the mobile station 100. The temporary ID herein is ID information that is issued by the exchange 400 when the mobile station 100 connects with a network.

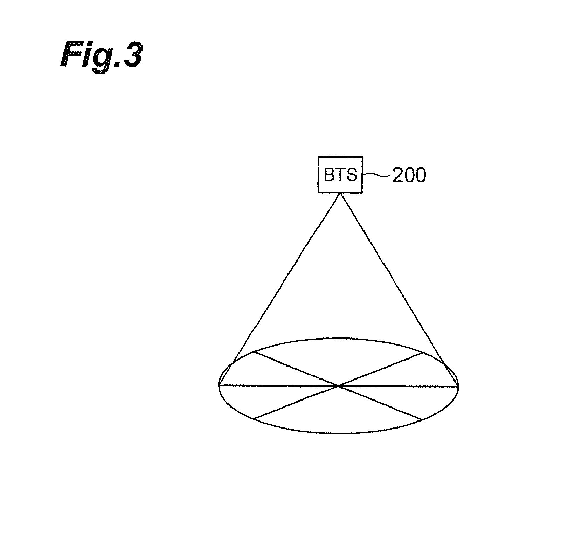

FIG. 3 is a diagram illustrating a relationship between a BTS 200 and sectors. The BTS 200 lies in the center of an area depicted by a circle, and a plurality of pieces equally divided with the BTS 200 as the center are sectors. For example, in FIG 3, a communication area of the BTS 200 consists of up to six sectors and, to each of the sectors, a sector ID (sector identifier) that can uniquely identify a sector is allocated. The RNC 300 can grasp in which sector a mobile station 100 is located, by using the sector identifier through the BTS 200.

The RNC 300 can also calculate in which location in a sector a mobile station 100 is located and GAI (geographical area ID) of the calculated location, based on delays of signals obtained when performing the processing of an RRC connection request. It is also possible to identify the location of the mobile station 100 based on the sector ID and the location in the sector.

The location registration signal receiver 303 is a component that receives, through the RNC communication controller 302, location registration signals transmitted by the mobile station 100.

The signal count calculation unit 304 is a component that measures the number of signals by sector (the number of signals: that is, the number of location registration signals transmitted by the mobile station 100 per unit time in the sector), which is the sum of the number of the location registration signals occurring for each sector, by the above-described method from the location registration signal received by the location registration signal receiver 303.

The signal count calculation unit 304 transmits the number of signals by sector to the exchange 400 through the RNC communication controller 302.

Next, the exchange 400 will be explained. The exchange 400 is configured to include an exchange communication controller 401, a converter 402, a location registration signal processing unit 404, and a storage unit 403. The exchange communication controller 401 is a component that receives an Initial UE Message transmitted from the RNC 300 and performs communication connection processing using this Initial UE Message.

The converter 402 is a component that converts an ID such as a temporary ID included in the Initial UE Message received by the exchange communication controller 401 into a telephone number. The converter 402, in converting processing, extracts a telephone number related to an ID such as a temporary ID from a subscriber profile information storage unit (not shown) storing therein subscriber profile information, and converts it into the telephone number thus extracted. This subscriber profile information storage unit is, for example, provided in an HLR (home location register) not shown and manages and stores therein IDs such as temporary IDs and telephone numbers in association with each other.

The location registration signal processing unit 404 is a component that receives location registration signals from mobile stations 100 through BTSs 200 and measures the number of registrations that is the number of mobile stations 100 registered in a location registration area based on the location registration signals thus received.

As described above, in the present embodiment, the mobile station 100 transmits a location registration signal when the mobile station 100 crosses a boundary between location registration areas. The location registration signal processing unit 404 can thereby grasp the actual number of mobile stations 100 that exist in the location registration area. In the standard specification "Mobile Application Part (MAP) specification: 3GPP TS 29.002", a method by which an exchange 400 manages location registration is described. The processing in the exchange 400 of the present embodiment conforms to this method.

The storage unit 403 is a component that inputs and stores therein the number of registrations measured by the location registration processing unit 404 and the number of signals received from the RNC 300 through the exchange communication controller 401. The telephone numbers converted by the converter 402, the location information of mobile stations 100 included in an Initial UE Message, and the time when the location information is located can be stored therein in association with one another. The information analysis device 600 performs the population distribution derivation processing described below based on, for example, the location information of the mobile stations 100 acquired as described above. The location information acquisition method is not limited to the above-described processing, and as the location information other than the location registration signal, the GPS location information of a user can be targeted.

Next, the information analysis device 600 will be explained. The information analysis device 600 is configured to include an information analysis device communication controller 601, a holding unit 602, an extracting unit 603, a population distribution calculation unit 604, an output unit 605, and a target time input unit 606. The information analysis device communication controller 601 is a component that controls the communication between the information analysis device 600 and the exchange 400, and receives a location registration signal including a sector ID, location registration time information and a user ID subjected to location registration, through the exchange communication controller 401 and the RNC communication controller 302 for the population distribution derivation processing described below.

The holding unit 602 is a component that holds the location registration signal received by the information analysis device communication controller 601. The holding unit 602 may hold attribute information for each user (for example, age, gender, and address). The following explanation will be provided where the holding unit 602 holds attribute information for each user.

The target time input unit 606 is a component for a user to input at what point in time population distribution should be determined, that is, a target time for population distribution to be determined.

The extracting unit 603 is a component that extracts a location registration signal of which the location registration time is immediately preceding a target time and a location registration signal of which the location registration time is immediately following the target time from the location registration signal for each user as a target for the population distribution calculation described below. The user as a target for the population distribution calculation described below may be all users of the received location registration signals or may be users limited in accordance with attribute information. The extracting unit 603 may, in other words, by referring to the attribute information for each user held by the holding unit 602, limit users as targets in accordance with the attribute information and extract the location registration signals immediately preceding and following the target time for the limited users.

The population distribution calculation unit 604 is a component that calculates population distribution by sector at a target time through the processing described below. The population distribution calculation unit 604 in the present embodiment calculates population distribution by sector at the target time based on the processing described below without using the number of location registration signals by sector counted by the RNC 300 and without using the registration number of each location registration area determined by the exchange 400.

The output unit 605 is a component that outputs the population distribution information calculated by the population distribution calculation unit 604. It is needless to say that the "output" herein widely includes display output and print output. In other words, the population distribution information may be displayed on a display, etc., may be printed from a printer, etc., or may be output both on a display and from a printer.

[Processing performed by the information analysis device]

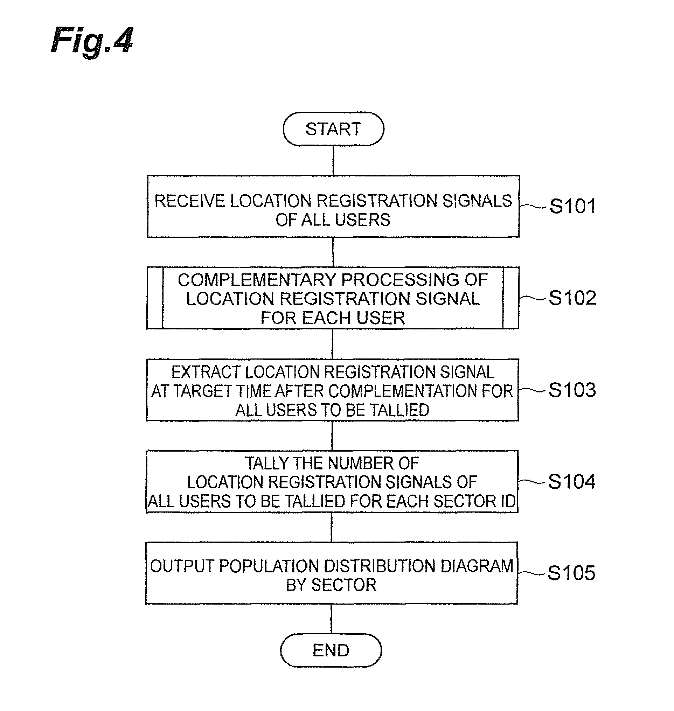

Next, processing performed by the information analysis device 600 in the communication system 10 will be explained with reference to Figs. 4 to 7.

At the information analysis device 600, when a user inputs a target time for population distribution from the target time input unit 606 and performs a predetermined operation for the starting of processing, the processing in Fig. 4 is started by the information analysis device 600. The inputting of the target time is not an essential condition, and for example, a predetermined time may be preset as a target time. The starting of processing does not always require the predetermined operation for the starting of processing by the user, and the processing in Fig. 4 may be started automatically by a scheduled operation, for example.

In Step S101 in Fig. 4, the information analysis device communication controller 601 receives a location registration signal including a sector ID, location registration time information and a user ID subjected to location registration, through the exchange communication controller 401 and the RNC communication controller 302, and the holding unit 602 holds the received location registration signal.

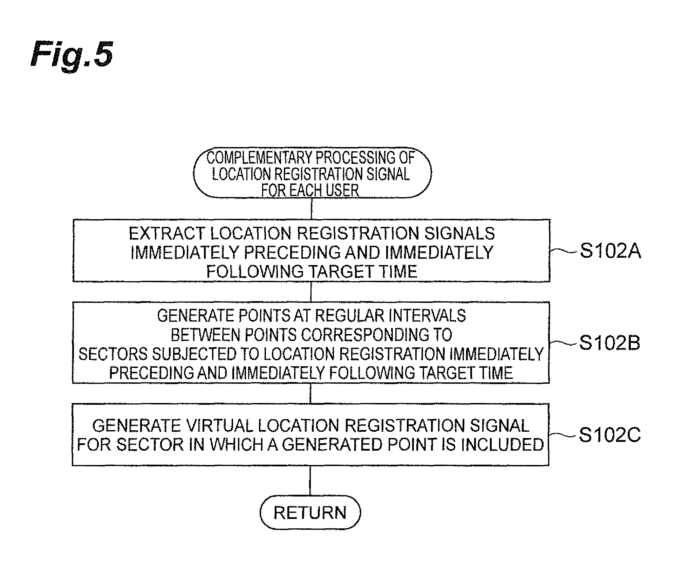

In the next Step S102, the complementary processing described below of a location registration signal for each user in Fig. 5 is performed. The extracting unit 603 extracts a location registration signal immediately preceding a target time (hereinafter referred to as the "immediately preceding location registration signal") and a location registration signal immediately following the target time (hereinafter referred to as the "immediately following location registration signal") from a location registration signal of a user held in the holding unit 602 (Step S102A), and the population distribution calculation unit 604 generates points virtually at regular intervals between a location corresponding to a sector subjected to location registration immediately preceding (that is, a location corresponding to a sector ID included in the immediately preceding location registration signal) and a location corresponding to a sector subjected to location registration immediately following (that is, a location corresponding to a sector ID included in the immediately following location registration signal) location registration signal (Step S102B). As the location corresponding to a sector subjected to location registration (that is, a location corresponding to a sector ID included in a location registration signal), a sector center location, a point acquired by what is called PRACH-PD locating calculation (GAI (Graphical Area ID)), and the location of the center of gravity of a sector may be adopted. In Step S102B, the virtual points may be generated on a line or may be generated on a line in conformity with a road or track on a virtual map. Here, an example in which the sector center location is adopted as the location corresponding to a sector subjected to location registration, and the virtual points are generated on a line will be explained as one example.

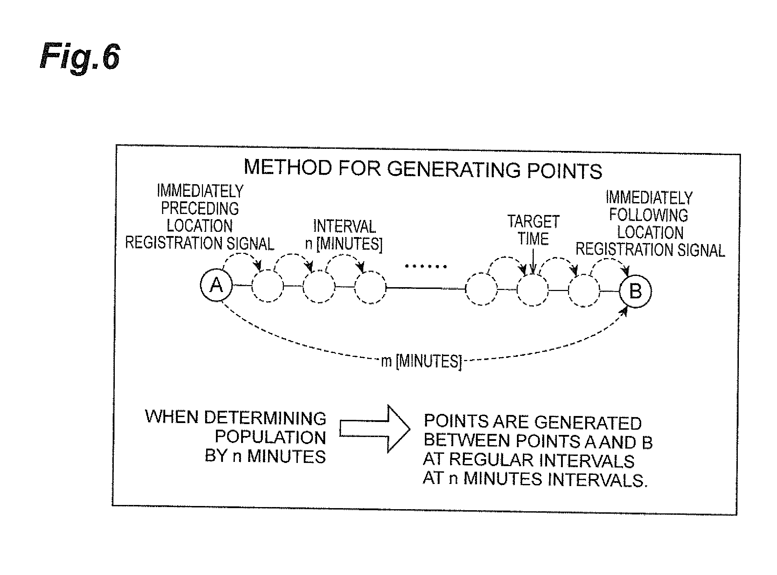

As illustrated in Fig. 6, when determining population by n minutes (that is, population at n minutes intervals) at the time interval between the immediately preceding and immediately following location registration signals being m minutes, a line connecting between a location corresponding to a sector ID included in the immediately preceding location registration signal (here, the sector center location A) and a location corresponding to a sector ID included in the immediately following location registration signal (here, the sector center location B) is divided into (m/n) equal parts to generate points virtually at regular intervals with n minutes intervals. For example, when population by one minute (that is, population at 1 minute intervals) is determined with a target time being 0:30, a location registration time related to the immediately preceding location registration signal for a user being 0:00, and a location registration time related to the immediately following location registration signal being 0:33, a line connecting between the sector center location A related to the immediately preceding location registration signal and the sector center location B related to the immediately following location registration signal is divided into 33 equal parts to generate points virtually at regular intervals with 1 minute intervals. The population distribution calculation unit 604 generates a virtual location registration signal for the sector in which the generated point is included (Step S102C). The processing in Fig. 5 is performed for each user.

In Step S102A in Fig. 5, the extracting unit 603 may, by referring to the attribute information for each user held by the holding unit 602, limit target users in accordance with the attribute information and extract the immediately preceding and immediately following location registration signals for the limited users. In this case, location registration signals to be processed thereafter can be narrowed down, thereby reducing processing load and speeding up processing.

When the processing in Fig. 5 for all users to be tallied is completed, the process returns to Fig. 4. In the next Step S103, the population distribution calculation unit 604 extracts the location registration signal of the target time from the location registration signal generated in the processing in Fig. 5 for all users to be tallied. In the above-described example, the location registration signal generated for a sector in which the point of target time 0:30 is included is extracted.

In the next Step S104, the population distribution calculation unit 604 tallies the number of the location registration signals of all users to be tallied for each sector ID. The number of the location registration signals for each sector ID at the target time can be thereby obtained, and through the processing described below, population by sector at the target time can be determined.

Then, processing (hereinafter referred to as the "scaling estimation processing") for determining population by sector at a target time from the number of the location registration signals of all users to be tallied for each sector ID at the target time (that is, the number of users for each sector ID) will be explained. Hereinafter, as one aspect of the scaling estimation processing, processing for determining population using a factor for converting the number of users into population (hereinafter referred to as the "scaling factor") will be explained.

The scaling factor is determined in advance for, for example, the attribute of users. The population distribution calculation unit 604 stores in advance scaling factors for each attribute (for example, gender, age group, and address) of users. In Step S104, the population distribution calculation unit 604, for example, classifies the users to be tallied by attributes, and for each attribute after classification, tallies the number of the location registration signals for each sector ID at the target time, and multiplies the tallied value by the scaling factor corresponding to the attribute, thereby determining population for each sector ID at the target time for each attribute. Population by sector for each attribute can then be obtained. Furthermore, the population distribution calculation unit 604 may tally population for each attribute for each ID sector to determine population by sector at the target time.

As another derivation method, in Step S104, the population distribution calculation unit 604 may refer to the attribute information for each user held by the holding unit 602, read out a scaling factor corresponding to each of the location registration signals of the users to be tallied, that is, a scaling factor corresponding to the attribute of each of the users to be tallied, and, without classifying the users to be tallied by attributes as in the above-described example, calculate the sum of the scaling factors for each sector ID for all users to be tallied, thereby determining population by sector at the target time.

The scaling factor may be, other than being set in accordance with the attribute of users, set in accordance with, for example, time zone and place.

The scaling factor may be, other than being stored in advance, determined as follows. The scaling factor uses, as an example, the inversion of the product of a "presence rate" and a "terminal penetration rate" (that is, the product is the ratio of the presence count (the measured number of terminals located in an area) to a population of the area). Here, the "presence rate" means the ratio of the measured number of terminals located in an area to the number of terminal subscriptions in the area, and the "terminal penetration rate" means the ratio of the number of terminal subscriptions in the area to a population of the area. Such a scaling factor is preferably determined with a unit of the above-described attribute, time zone, and place, but that is not an essential condition. As a unit for determining a scaling factor, each prefecture in an address, each age group with 5-year steps, each gender, each one hour as a time zone may be adopted as an example.

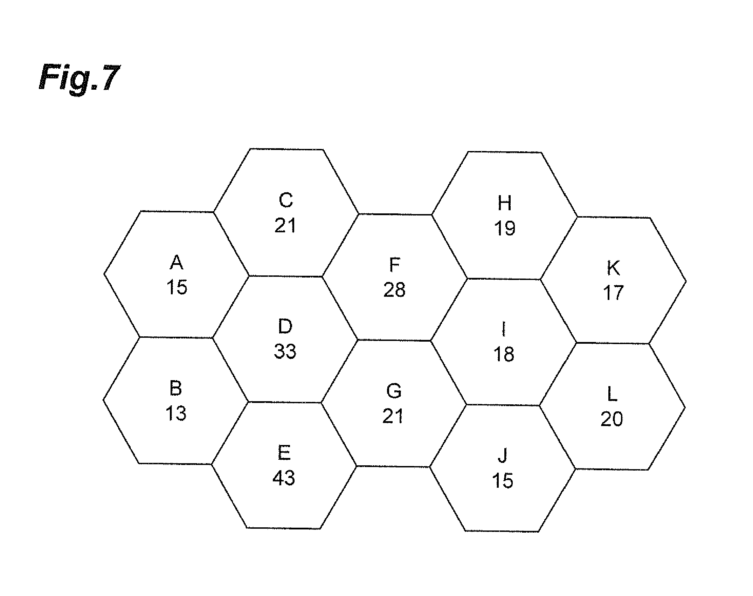

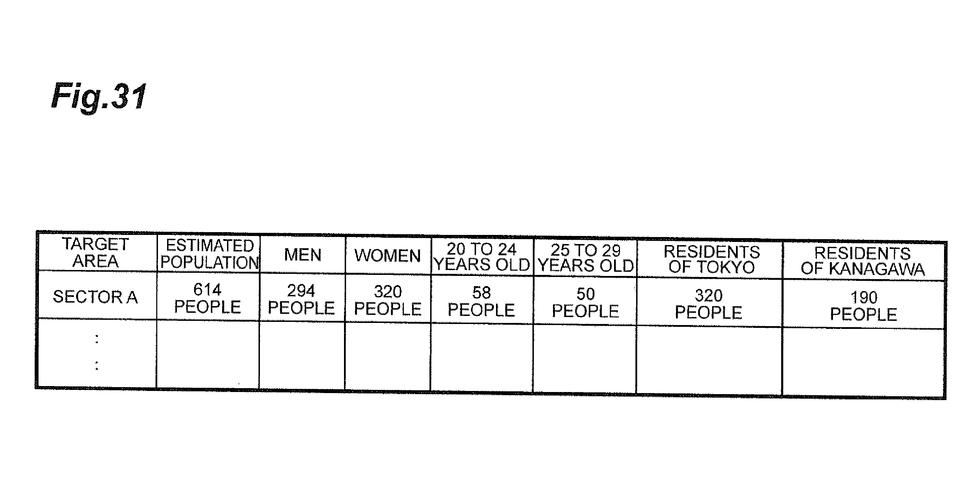

In the next Step S105, the output unit 605 outputs a population distribution diagram by sector representing the population distribution by sector determined as described above in a two-dimensional manner. An example of a population distribution diagram by sector is illustrated in Fig. 7. In Fig. 7, A to L represent sector IDs, and the figure under each sector ID represents the population of the sector. As another output example, the output unit 605 can output, as illustrated in Fig. 31, population estimated for each sector (represented as "estimated population" in Fig. 31) and population for each attribute such as gender, age group, and address in each sector in tabular form. A condition obtained by combining a plurality of attributes (for example, a condition of "women living in Tokyo" obtained by combining gender and address) may be adopted. The output here includes various output modes such as display output, voice output, and print output.

According to the first embodiment, based on the location registration signal immediately preceding and immediately following a target time for each user, population distribution by sector is calculated at the target time, thereby allowing high-precision data regarding macroscopic population distribution to be easily and quickly collected. Since the population distribution by sector at the target time is calculated not based on the occurrence number of the location registration signal, but based on the location registration signal immediately preceding and immediately following the target time for each user, the population distribution by sector at the target time can be calculated with high precision from the location registration signal of which the generating time interval fluctuates. In addition, inconvenience that is expected when the occurrence number of the location registration signal is based (for example, inconvenience caused by considerably more location registration signals than an actual population figure occurring in the vicinity of a location registration area boundary) can be prevented.

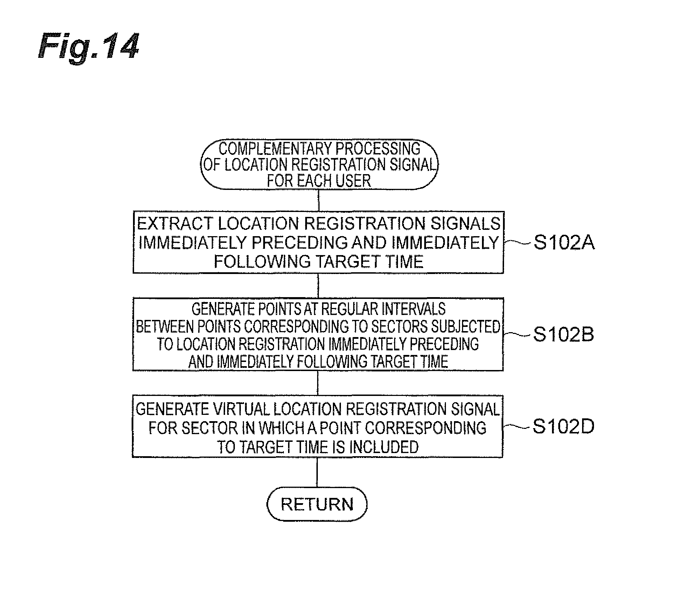

In Step S102C of the complementary processing in Fig. 5 in the first embodiment, an example was explained in which a virtual location registration signal was generated for a sector in which each of a plurality of points is generated at regular intervals. As an alternative example thereof, out of the points generated at regular intervals, only for a sector in which a point corresponding to a target time, a virtual location registration signal may be generated. In other words, as illustrated in Fig. 14, in Step S102D instead of Step S102C in Fig. 5, a virtual location registration signal may be formed for a sector in which a point corresponds to a target time. In this case, since only one virtual location registration signal for a sector in which a point corresponding to a target time is generated, the processing of Step S 103 in Fig. 4 (extraction of location registration signal at the target time) is eliminated, thereby reducing processing load and speeding up processing.

[Second embodiment]

In contrast to the processing of the first embodiment described above in which population distribution by sector is determined using a plurality of points virtually generated between the points corresponding to the location registration signals immediately preceding and immediately following a target time, the processing of the second embodiment described below determines population distribution by sector using the weights of the location registration signals immediately preceding and immediately following a target time.

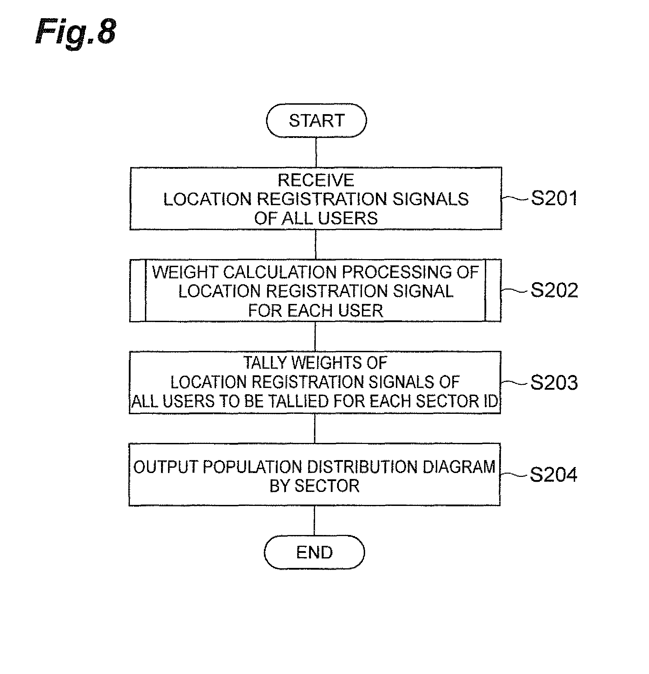

Since the second embodiment is similar to the first embodiment with regard to the system structure of the communication system 10 in Fig. 1 and the functional block configuration of the communication system 10 in Fig. 2, redundant explanations will be omitted. Since it differs in the processing details performed by the population distribution calculation unit 604, the processing of the second embodiment including the processing details will be explained hereinafter with reference to Figs. 8 to 11.

At the information analysis device 600, when a user inputs a target time for population distribution from the target time input unit 606 and performs a predetermined operation for the starting of processing, the processing in Fig. 8 is started by the information analysis device 600. The inputting of the target time is not an essential condition, and for example, a predetermined time may be preset as a target time. The starting of processing does not always require the predetermined operation for the starting of processing by the user, and the processing in Fig. 8 may be started automatically by a scheduled operation, for example.

In Step S201 in Fig. 8, the information analysis device communication controller 601 receives a location registration signal including a sector ID, location registration time information and a user ID subjected to location registration, through the exchange communication controller 401 and the RNC communication controller 302., and the holding unit 602 holds the received location registration signal.

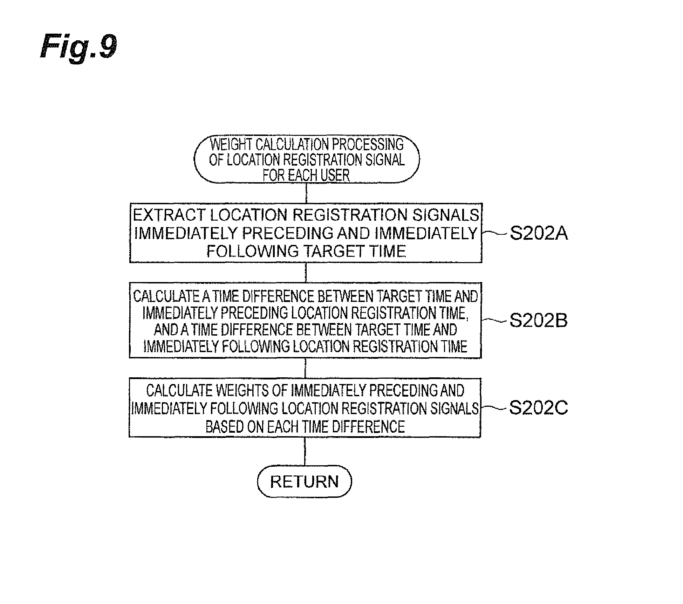

In the next Step S202, the weight calculation processing of a location registration signal for each user in Fig. 9 is performed as described below. The extracting unit 603 extracts a location registration signal immediately preceding a target time (hereinafter referred to as the "immediately preceding location registration signal") and a location registration signal immediately following the target time (hereinafter referred to as the "immediately following location registration signal") from a location registration signal of a user held in the holding unit 602 (Step S202A). The population distribution calculation unit 604 calculates a first time difference between the immediately preceding location registration time and the target time and a second time difference between the immediately following location registration time and the target time (Step S202B).

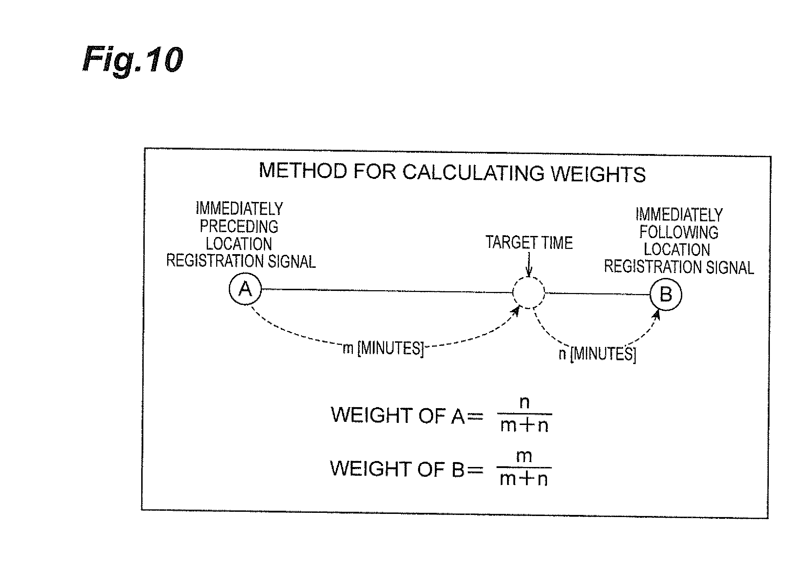

The population distribution calculation unit 604 calculates a value obtained by dividing the second time difference by the sum of the first time difference and the second time difference as the weight of the immediately preceding location registration signal, and calculates a value obtained by dividing the first time difference by the sum of the first time difference and the second time difference as the weight of the immediately following location registration signal (Step S202C). As illustrated in Fig. 10, when the first time difference between the immediately preceding location registration time and the target time is m minutes, and the second time difference between the immediately following location registration time and the target time is n minutes, the weight of the immediately preceding location registration signal A is (n/(m+n)), while the weight of the immediately following location registration signal B is (m/(m+n)). For example, when the target time is 0:30, the location registration time related to the immediately preceding location registration signal for a user is 0:00, and the location registration time related to the immediately following location registration signal is 0:40, the first time difference m is 30 minutes, while the second time difference is 10 minutes. The weight of the immediately preceding location registration signal A is (10/(30+10)) = 0.25, while the weight of the immediately following location registration signal B is (30/(30+10)) = 0.75. The calculation method for the immediately preceding and immediately following location registration signals is not limited to the above-described one, and the weight of the location registration signal may be calculated by another formula using the first and second time differences.

For a value having a fractional part in the weight, the weight may be determined in accordance with a predetermined method in which, for example, for a value having the third decimal place or more, it is rounded off to the second decimal place.

The processing in Fig. 9 is performed for all users to be tallied. In Step S202A in Fig. 9, the extracting unit 603 may, by referring to the attribute information for each user held by the holding unit 602, limit target users in accordance with the attribute information and extract the immediately preceding and immediately following location registration signals for the limited users. In this case, location registration signals to be processed thereafter can be narrowed down, thereby reducing processing load and speeding up processing.

When the processing in Fig. 9 for all users to be tallied is completed, the process returns to Fig. 8. In the next Step S203, the population distribution calculation unit 604 tallies the weights of the location registration signals of all users to be tallied for each sector ID. This allows the sum of the weights of the location registration signals for each sector ID at the target time to be obtained, and by the scaling estimation processing described in the first embodiment, population distribution by sector at the target time can be obtained from the sum of the weights.

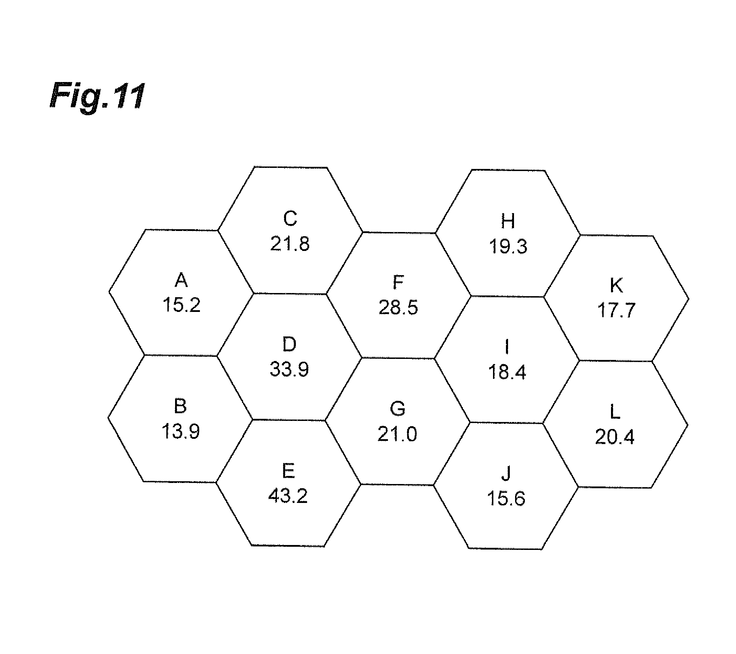

In the next step S204, the output unit 605 outputs a population distribution diagram by sector representing the population distribution by sector determined as described above in a two-dimensional manner. An example of a population distribution diagram by sector is illustrated in Fig. 11. In Fig. 11, A to L represent sector IDs, and the figure under each sector ID represents the population of the sector. The example in Fig. 11 illustrates an example in which the weight of the location registration signal is made to a value having the first decimal place, and thereafter, the weights of the location registration signals of all users to be tallied for each sector ID are tallied.

According to the first embodiment, based on the location registration signal immediately preceding and immediately following a target time for each user, population distribution by sector is calculated at the target time, thereby allowing high-precision data regarding macroscopic population distribution to be easily and quickly collected. Since the population distribution by sector at the target time is calculated not based on the occurrence number of the location registration signal, but based on the location registration signal immediately preceding and immediately following the target time for each user, the population distribution by sector at the target time can be calculated with high precision from the location registration signal of which the generating time interval fluctuates. In addition, inconvenience that is expected when the occurrence number of the location registration signal is based (for example, inconvenience caused by considerably more location registration signals than an actual population figure occurring in the vicinity of a location registration area boundary) can be prevented.

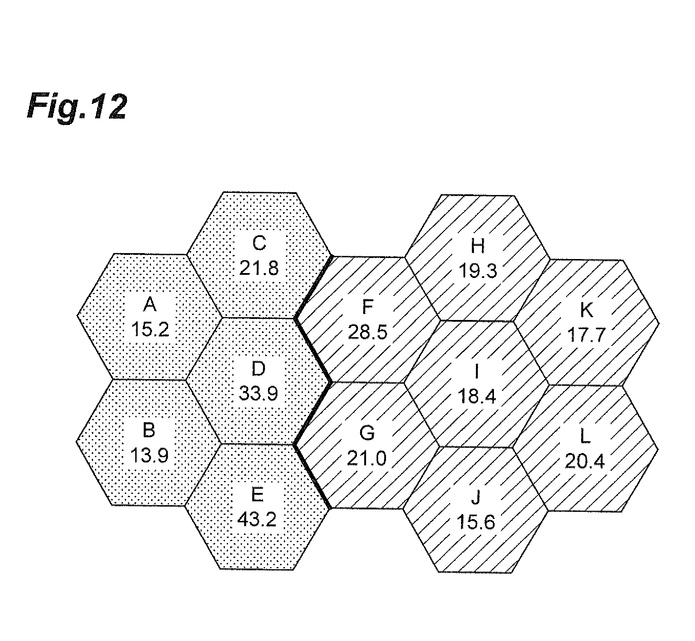

The first and second embodiments are examples in which population distribution is calculated by sector. In addition, by performing processing for tallying the population of sectors belonging to the same location registration areas for each location registration area, population distribution by location registration areas can be calculated. For example, the population of the location registration area to which the sectors A to E belong is calculated, and the population of the location registration area to which the sectors F to L belong is calculated. As illustrated in Fig. 12, by providing each location registration area with notation in accordance with population (for example, color coding, hatching, and shading), a diagram representing population distribution by location registration areas as well as population distribution by sector can be output.

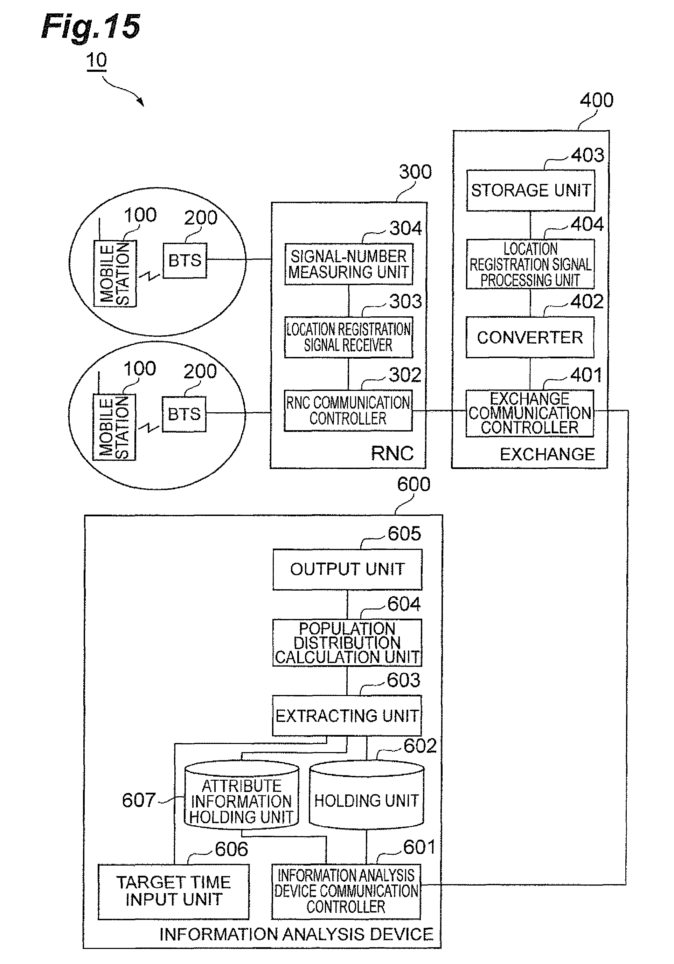

The first and second embodiments are examples in which attribute information for each user (for example, age, gender, and address) is held by holding unit 602. Without being limited thereto, as illustrated in Fig. 15, a configuration in which the information analysis device 600 is provided with, apart from the holding unit 602, an attribute information holding unit 607 may be adopted.

The first and second embodiments are examples in which the extracting unit 603 limits target users in accordance with attribute information and extracts the immediately preceding and immediately following registration signals for the limited users. Without being limited thereto, for example, the population distribution calculation unit 604 may limit target users in accordance with attribute information in Steps S 103 and S 104 in Fig. 4 and Step S203 in Fig. 8 and perform population distribution calculation for the limited users. When thus limiting target users in accordance with attribute information not at the time of extraction of location registration signals, but at the time of population distribution calculation, population distribution calculation may be performed according to various conditions such as age and gender. Needless to say, limiting of target users in accordance with attribute information may be done for both extraction of location registration signals and population distribution calculation.

[Third embodiment]

In the following third embodiment, an example will be explained, in which, as an alternative aspect of the first embodiment, the population distribution calculation unit 604 generates a plurality of virtual points at irregular intervals corresponding to transit points at predetermined time intervals between a location corresponding to a sector ID included in a location registration signal immediately preceding a target time and a location corresponding to a sector ID included in a location registration signal immediately following the target time to generate virtual location registration signals. Specifically, this is an embodiment in which a ratio correlated to the inter-sector relative ratio of intra-sector moving velocities is determined in advance, and based on the ratio, virtual points are generated at irregular intervals to generate virtual location registration signals.

As the "ratio correlated to the inter-sector relative ratio of intra-sector moving velocities", the inter-sector relative ratio of intra-sector moving velocities, which will be described below, itself may be used, and another ratio (for example, the inter-sector relative ratio of intra-sector staying times, which will be described below) may be used. It is not essential that the unit of the relative ratio is by sector, and any unit of which the boundaries can be associated with sector boundaries (for example, a mesh and a numbered subdivision of a town) may be used. Hereinafter, in order to make the explanation easy, an example in which the unit of the relative ratio is by sector will be explained.

((1) Example using the inter-sector relative ratio of intra-sector moving velocities)

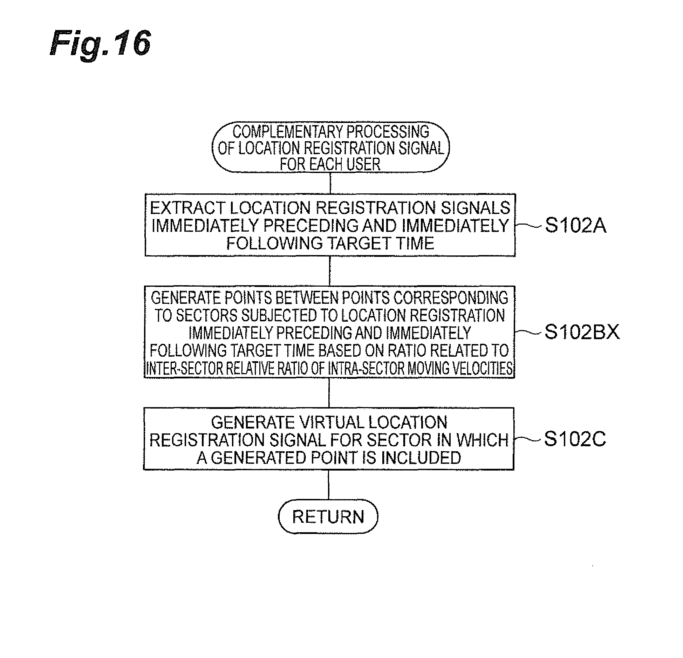

First, an example will be explained, in which the inter-sector relative ratio of intra-sector moving velocities is used as the "inter-sector relative ratio of intra-sector moving velocities". Hereinafter, in order to avoid redundant explanations, the difference from the first embodiment will be explained predominantly. In the third embodiment, the complementary processing of location registration signals in Fig. 5 in the first embodiment is the processing illustrated in Fig. 16. Specifically, after a location registration signal immediately preceding a target time and a location registration signal immediately following the target time are extracted in Step S102A in Fig. 16, the population distribution calculation unit 604 generates in Step S102BX, a plurality of virtual points corresponding to transit points at predetermined time intervals between a location corresponding to a sector ID included in the immediately preceding location registration signal and a location corresponding to a sector ID included in the immediately following location registration signal based on a predetermined inter-sector relative ratio of intra-sector moving velocities.

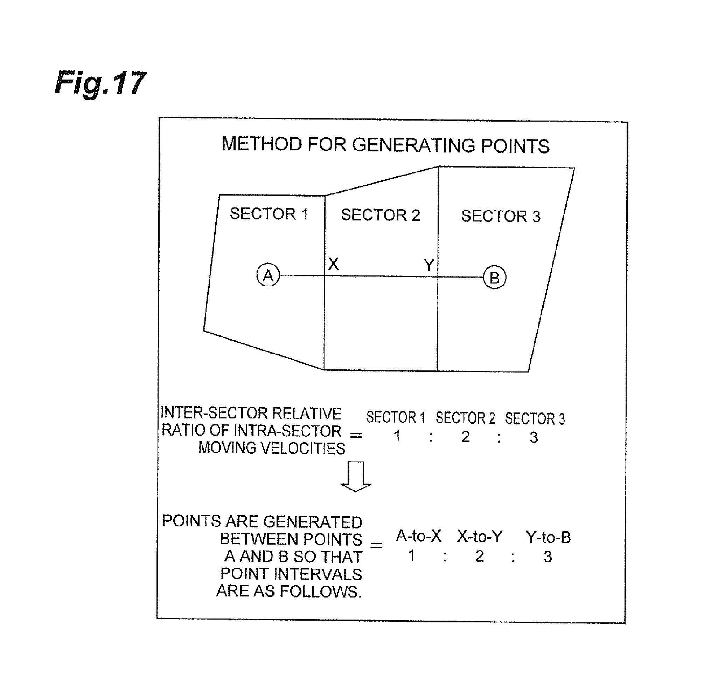

As illustrated in Fig. 17, assuming that under the condition that the location A corresponding to the sector ID included in the location registration signal immediately preceding the target time exists in the sector 1, that the location B corresponding to the sector ID included in the location registration signal immediately following it exists in the sector 3, and the sector 2 exists between the sectors 1 and 3, the predetermined inter-sector relative ratio of intra-sector moving velocities (sector 1 : sector 2 : sector 3) is 1 : 2 : 3. Assuming that the intersection of the line connecting the points A and B and the boundary line between the sectors 1 and 2 be a point X, and the intersection of the line connecting the points A and B and the boundary line between the sectors 2 and 3 be a point Y, when generating a plurality of virtual points corresponding to transit points at regular time intervals (for example, every 1 minute) on the line connecting between the points A and B, the relative ratio of the intervals of the points (A-to-X : X-to-Y : Y-to-B) is set to be the inter-sector relative ratio of intra-sector moving velocities, that is, 1 : 2 : 3. In other words, in the sector 1 (A-to-X), in which the intra-sector velocity is relatively low as compared to the sectors 2 and 3, the point interval is relatively small as compared to the sectors 2 and 3. In the sector 3 (Y-to-B), in which the intra-sector velocity is relatively high as compared to the sectors 1 and 2, the point interval is relatively large as compared to the sectors 1 and 2.

After thus generating a plurality of points virtually on the line connecting between the locations A and B in Step S102BX, the population distribution calculation unit 604 generates a virtual location registration signal for the sector in which the generated point is included (Step S 102C).

Through the processing in Fig. 16, a plurality of virtual points are generated on the line connecting between the locations A and B at irregular intervals to generate virtual location registration signals based on the inter-sector relative ratio of intra-sector moving velocities.

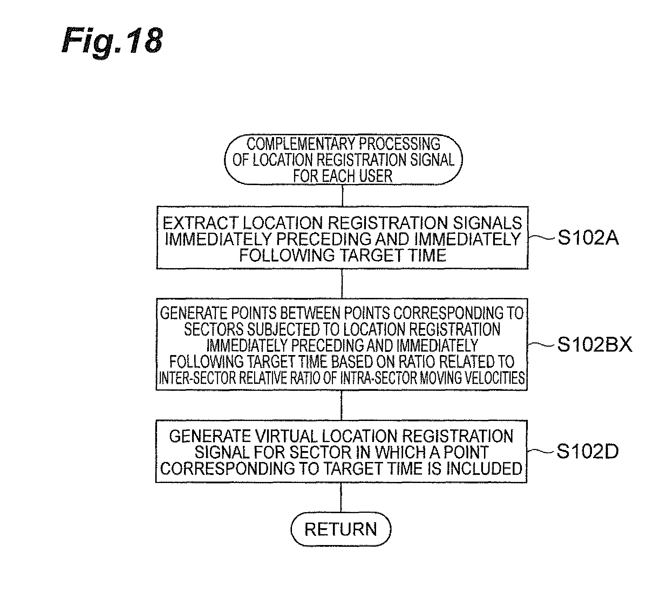

As an alternative example of Step S102C of the complementary processing in Fig. 16, out of the points generated at irregular intervals, only for a sector in which a point corresponding to a target time, a virtual location registration signal may be generated. In other words, as illustrated in Fig. 18, in Step S102D instead of Step S102 C in Fig. 16, a virtual location registration signal may be formed for a sector in which a point corresponds to a target time. In this case, only one virtual location registration signal for a sector in which a point corresponding to a target time is generated, thereby further reducing processing load and speeding up processing.

The way of determining the inter-sector relative ratio of intra-sector moving velocities will be outlined. As one example, for each sector, a moving velocity for each user is determined first by the method described below, and then by averaging the moving velocities of all users, the intra-sector moving velocity of the sector is determined. When determining the inter-sector relative ratio of intra-sector moving velocities in advance, location information with finer grain size than the location registration signal (for example, the GPS location information of a user) is preferably used. The inter-sector relative ratio of intra-sector moving velocities may be determined for each specific time zone (for example, for each time zone such as morning, daytime, evening, and midnight) and may be determined for each day of the week, or the weekday average and holiday average.

As a method for determining a moving velocity for each user, for example, the following first and second methods may be adopted. A sector for which a moving velocity for each user is determined refers to a "target sector" here.

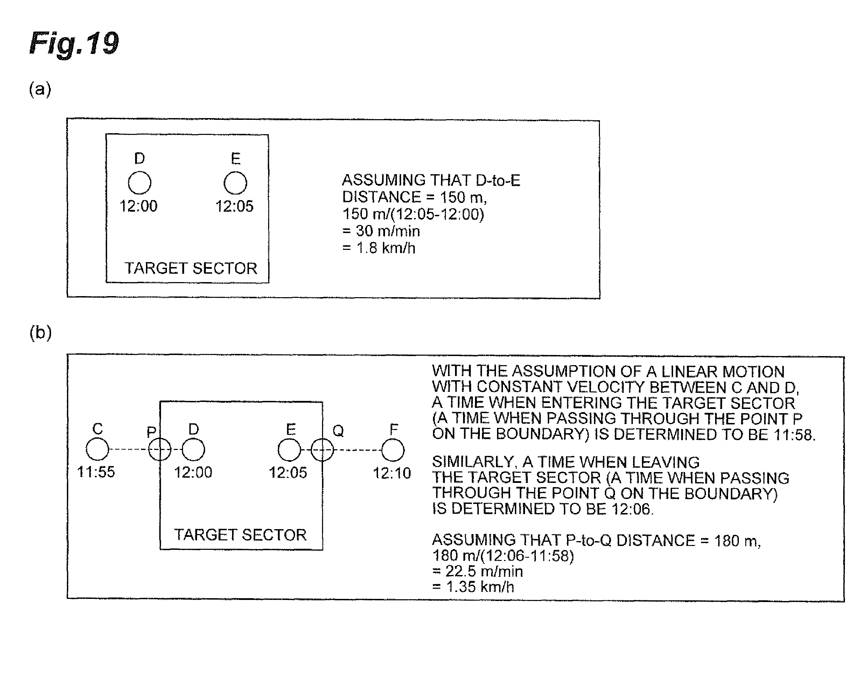

In the first method, from location information observed first and location information observed last in the target sector, the distance and the difference in observation time between the two locations are determined, and by dividing the determined distance by the difference in observation time, the moving velocity is determined. For example, as illustrated in Fig. 19(a), from the location information observed first in the target sector (the location D and the observation time 12:00) and the location information observed last (the location E and the observation time 12:05), the distance (150 meters) and the difference in observation time (5 minutes) between D and E are determined, and by dividing the distance (150 meters) by the difference in observation time (5 minutes), the moving velocity (1.8 km/hour) can be determined.

In the second method, in addition to location information observed first and location information observed last in the target sector, location information immediately before entering the target sector and location information immediately after leaving the target time are used. For example, as illustrated in Fig. 19(b), from the location information immediately before entering the target sector (the location C and the observation time 11:55) and the location information immediately after leaving the target sector (the location D and the observation time 12:00), a time when entering the target sector with the assumption of a linear motion with constant velocity between C and D (that is, a time when passing through the point P on the boundary) and the point P on the boundary are determined. Similarly, from the location information observed last in the target sector (the location E and the observation time 12:05) and the location information immediately after leaving the target sector (the location F and the observation time 12:05), a time when leaving the target sector with the assumption of a linear motion with constant velocity between E and F (that is, a time when passing through the point Q on the boundary) and the point Q on the boundary are determined. Then, the distance between P and Q (180 meters) is determined from the locations P and Q, and the difference between the time when entering the target sector and the time when leaving the target sector (8 minutes) are determined, and by dividing the distance (180 meters) by the difference in observation time (8 minutes), the moving velocity (1.35 km/hour) can be determined.

A moving velocity for each user can be thus determined, and furthermore, by averaging the moving velocities of all users, an intra-sector average moving velocity can be determined, and from the ratio of intra-sector average moving velocities for each sector, the inter-sector relative ratio of intra-sector moving velocities can be determined.

((2) Example using the inter-sector relative ratio of intra-sector staying times)

Next, as the "ratio correlated to the inter-sector relative ratio of intra-sector moving velocities", an example using the inter-sector relative ratio of intra-sector staying times will be explained. In this case, since the complementary processing for location registration signals is nearly the same as the above-described processing in Figs. 16 and 18, redundant explanations will be omitted. The details of a method for generating points in Step S102BX in Figs. 16 and 18 will be explained hereinafter.

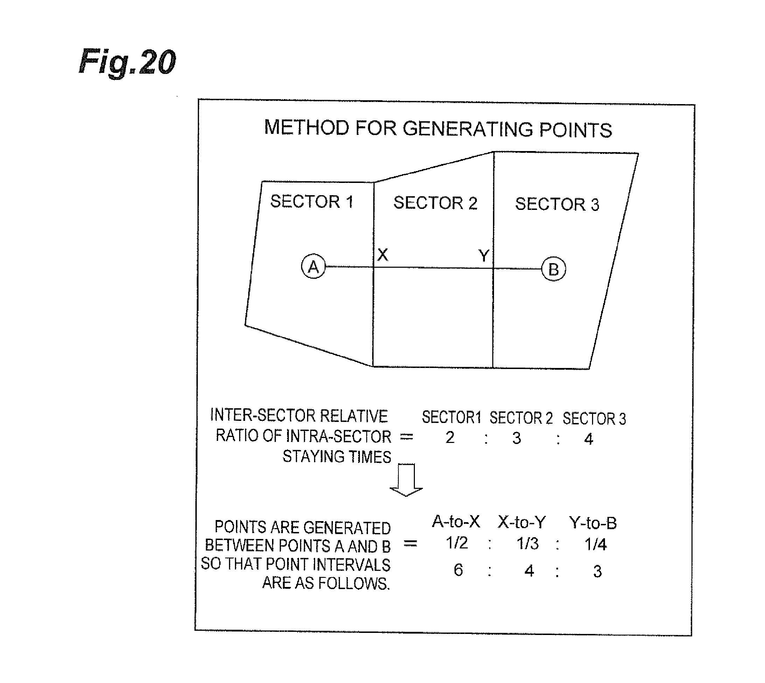

As illustrated in Fig. 20, assuming that under the condition that the location A corresponding to the sector ID included in the location registration signal immediately preceding the target time exists in the sector 1, that the location B corresponding to the sector ID included in the location registration signal immediately following it exists in the sector 3, and the sector 2 exists between the sectors 1 and 3, the predetermined inter-sector relative ratio of intra-sector staying times (sector 1 : sector 2 : sector 3) is 2 : 3 : 4. Assuming that the intersection of the line connecting the points A and B and the boundary line between the sectors 1 and 2 be a point X, and the intersection of the line connecting the points A and B and the boundary line between the sectors 2 and 3 be a point Y, when generating a plurality of virtual points corresponding to transit points at regular time intervals (for example, every 1 minute) on the line connecting between the points A and B, the relative ratio of the intervals of the points (A-to-X : X-to-Y : Y-to-B) is set to be the inversion of the inter-sector relative ratio of intra-sector staying times, that is, (1/2) : (1/3) : (1/4) = 6 : 4 : 3. In other words, in the sector 1 (A-to-X), in which the intra-sector staying time is relatively short as compared to the sectors 2 and 3, the point interval is relatively large as compared to the sectors 2 and 3. In the sector 3 (Y-to-B), in which the intra-sector staying time is relatively long as compared to the sectors 1 and 2, the point interval is relatively small as compared to the sectors 1 and 2.

After thus generating a plurality of points virtually on the line connecting between the locations A and B in Step S102BX, the population distribution calculation unit 604 generates a virtual location registration signal for the sector in which the generated point is included (Step S102C in Fig. 16). Alternatively, after generating a plurality of points virtually on the line connecting between the locations A and B in Step S102BX in Fig. 18, the population distribution calculation unit 604 generates a virtual location registration signal for the sector in which a point corresponding to the target time is included (Step S102D in Fig. 18).

Accordingly, based on the inter-sector relative ratio of intra-sector staying times, a plurality of virtual points are generated on the line connecting between the locations A and B at irregular intervals to generate virtual location registration signals.

The way of determining the inter-sector relative ratio of intra-sector staying times will be outlined. As one example, for each sector, a staying time for each user is determined first by the method described below, and then by averaging the staying times of all users, the intra-sector staying time of the sector is determined. When determining the inter-sector relative ratio of intra-sector staying times in advance, location information with finer grain size than the location registration signal (for example, the GPS location information of a user) is preferably used. The inter-sector relative ratio of intra-sector staying times may be determined for each specific time zone (for example, for each time zone such as morning, daytime, evening, and midnight) and may be determined for each day of the week, or the weekday average and holiday average.

As a method for determining a staying time for each user, for example, the following first and second methods may be adopted. A sector for which a staying time for each user is determined refers to a "target sector" here.

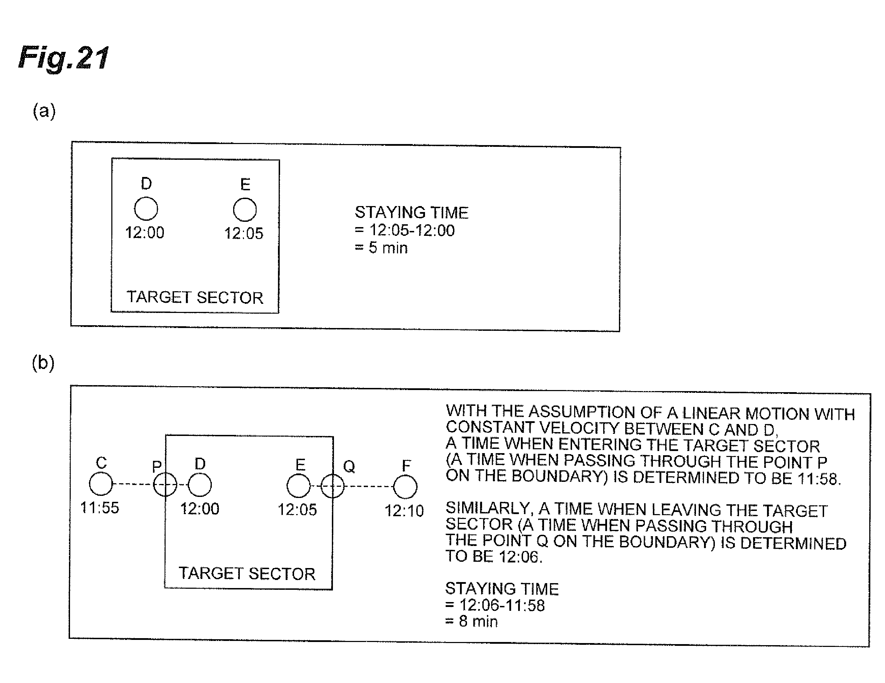

In the first method, from location information observed first and location information observed last in the target sector, the difference between the two observation times is determined as the staying time in the target sector. For example, as illustrated in Fig. 21(a), from the location information observed first in the target sector (the location D and the observation time 12:00) and the location information observed last (the location E and the observation time 12:05), the difference between the two observation times (5 minutes) can be determined as the staying time in the target sector.

In the second method, in addition to location information observed first and location information observed last in the target sector, location information immediately before entering the target sector and location information immediately after leaving the target time are used. For example, as illustrated in Fig. 21(b), from the location information immediately before entering the target sector (the location C and the observation time 11:55) and the location information observed last in the target sector (the location D and the observation time 12:00), a time when entering the target sector with the assumption of a linear motion with constant velocity between C and D (that is, a time when passing through the point P on the boundary) is determined. Similarly, from the location information observed last in the target sector (the location E and the observation time 12:05) and the location information immediately after leaving the target sector (the location F and the observation time 12:10), a time when leaving the target time with the assumption of a linear motion with constant velocity between E and F (that is, a time when passing through the point Q on the boundary) (it is temporarily set to be 12:06) is determined. Then, from the difference between the time when entering the target sector and the time when leaving the target sector (8 minutes) can be determined as the staying time in the target sector.

A staying time for each user can be thus determined, and furthermore, by averaging the staying times of all users, an intra-sector average staying time can be determined, and from the ratio of intra-sector average staying times for each sector, the inter-sector relative ratio of intra-sector staying times can be determined.

According to the third embodiment, based on the ratio correlated to the inter-sector relative ratio of intra-sector moving velocities determined in advance, a plurality of virtual points corresponding to transit points at predetermined time intervals are generated at irregular intervals to generate virtual location registration signals. When using the inter-sector relative ratio of intra-sector moving velocities itself as the "ratio correlated to the inter-sector relative ratio of intra-sector moving velocities", there is an advantage in that high-precision processing can be performed without being affected by the size of the sector. By contrast, when using the inter-sector relative ratio of intra-sector staying times as the "ratio correlated to the inter-sector relative ratio of intra-sector moving velocities", there is an advantage in that the intra-sector staying time can be obtained with a lighter processing load than the intra-sector moving velocity, thereby reducing the overall processing load.

In the first to third embodiments, the derivation of population distribution using location registration information has been explained. The present invention can be applied to the derivation of population distribution using location information other than the location registration information (for example, GPS location information and PRACH-PD coordinate information). Specifically, the present invention can be applied to an environment according to the following, if the environment can obtain point data including location information indicating the location of a user, locating time information at which the location information was obtained, and a user ID.

For example, in the information analysis device 600 in Fig. 15, the information analysis device communication controller 601 receives point data including location information indicating the location of a user, locating time information at which the location information was obtained, and a user ID from the outside. The extracting unit 603 extracts point data of which the locating time is immediately preceding a target time and point data of which the locating time is immediately following the target time from the point data for each user, and the population distribution calculation unit 604 estimates the location of the user at the target time by complementing the midway between a location indicated by the point data immediately preceding the target time and a location indicated by the point data immediately following the target time for each user, and can calculate population distribution by predetermined areas to be calculated at the target time based on the estimated location of each user by the scaling estimation processing described in the first embodiment. Accordingly, based on the point data immediately preceding the target time and the point data immediately following the target time for each user, population distribution by predetermined areas to be calculated at the target time is calculated, thereby allowing high-precision data regarding macroscopic population distribution to be easily and quickly collected. As the predetermined areas to be calculated, various areas may be adopted including a sector, a mesh, a numbered subdivision of a town, and a local government.

For example, the population distribution calculation unit 604 may calculate population distribution by predetermined areas to be calculated at a target time by generating a plurality of points corresponding to transit points at predetermined time intervals when moving from an immediately preceding locating time to an immediately following locating time on a line connecting between a location indicated by location information included in point data immediately preceding a target time and a location indicated by location information included in point data immediately following the target time for each user, estimating a point corresponding to the target time as the location of the user at the target time, and based on the estimated location of each user by the scaling estimation processing described in the first embodiment.

For generating a plurality of points corresponding to transit points at predetermined time intervals, the population distribution calculation unit may, based on the moving characteristics of a user in a generation area in which the above-described points are to be generated, determine the intervals of the points generated in the generation area. The generation area may be the same as the above-described areas to be calculated or be different therefrom.

The extracting unit 603 in the information analysis device 600 in Fig. 15 may limit target users in accordance with attribute information for each user held in the attribute information holding unit 607 and extract the immediately preceding and immediately following point data for the limited users. Otherwise, the population distribution calculation unit 604 in the information analysis device 600 in Fig. 15 may limit target users in accordance with the attribute information for each user held in the attribute information holding unit 607, limit the target users, and calculate population distribution by areas to be calculated for the limited users.

[Fourth embodiment]

The following fourth and fifth embodiments correspond to alternative examples of the second embodiment, and the other embodiments concerning processing for determining population distribution using the weights of location registration signals immediately preceding and following a target time will be explained.

As previously mentioned, the mobile station 100 transmits a location registration signal as a signal for requesting location registration to a location registration area at a timing such as when the mobile station 100 has crossed a boundary between location registration areas as a unit area when requesting location registration, when performing attach processing for registering the mobile station 100 to a network by turning on the mobile station 100, etc., when performing detach processing for deleting the registered state of the mobile station 100 by turning off the mobile station 100, etc., and at constant period for periodic location registration (for example, 54 minutes). Therefore, unless being in an incommunicable state caused by the mobile station 100 being turned off or out of range, the mobile station 100 transmits the location registration signal at least at the above-described constant period for periodic location registration (hereinafter referred to as the "period"). Focusing on this point, in the fourth and fifth embodiments, out of the location registration signals immediately preceding and immediately following a target time, for a location registration signal of which the time difference with the target time is longer than a reference value (for example, the "period t"), the time difference between the location registration time and the target time is regarded as an abnormal value, and the weight of the location registration signal of which the time difference is regarded as the abnormal value (hereinafter, referred to as the "location registration signal of which the time difference is an abnormal value") is 0. As the "reference value", the period of the periodic location registration (54 minutes) may be adopted, and considering a case in which periodic location registration occurs during communications, a time set to be longer than the period of the periodic location registration (54 minutes) may be adopted. The average location registration interval of all users to be tallied may be adopted. An example in which the reference value is the period t will be explained as an example.

In the following fourth embodiment, for a location registration signal of which the time difference between the location registration time and the target time is not longer than the reference value (the period t) (hereinafter referred to as the "location registration signal of which the time difference is a normal value"), the weight is set to be 1, while in the fifth embodiment, for the location registration signal of which the time difference is a normal value, the weight is calculated in accordance with the difference between the period t and the time difference (the details will be described later).

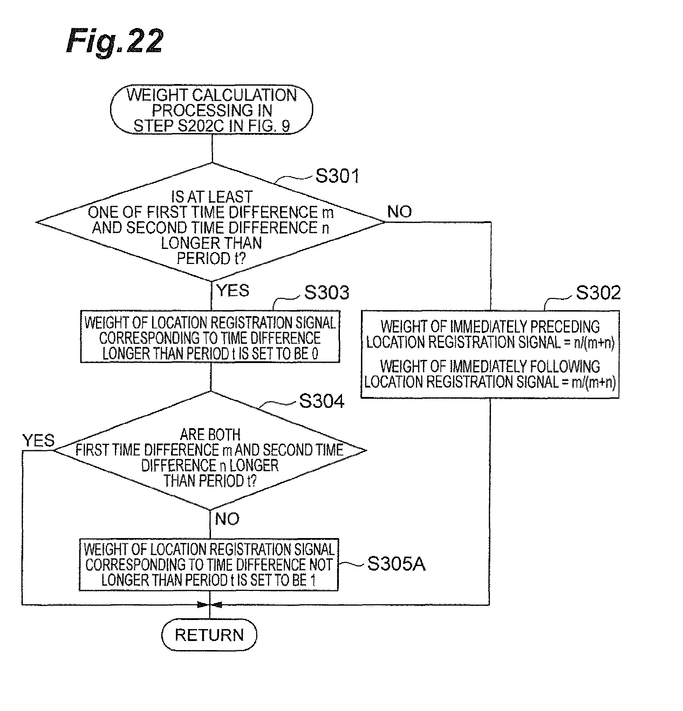

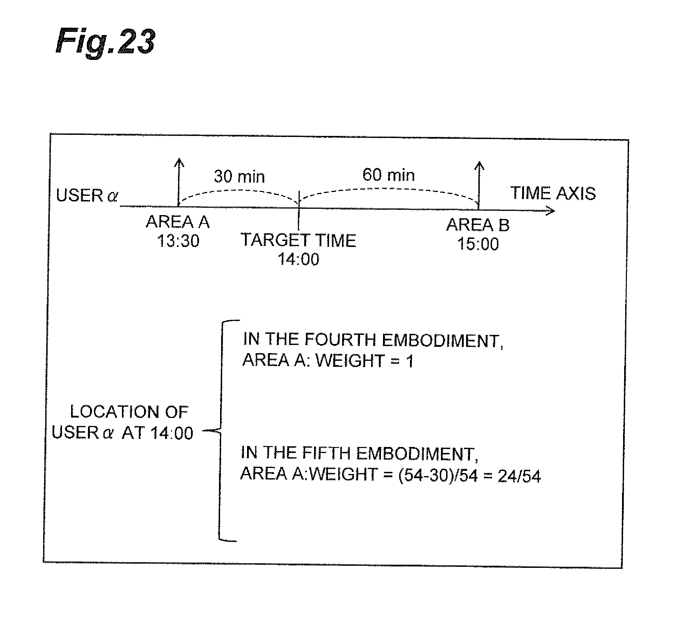

First, the fourth embodiment will be explained. Since the fourth embodiment is similar to the first embodiment in the system structure of the communication system 10 in Fig. 1 and the functional block configuration of the communication system 10 in Fig. 2, redundant explanations will be omitted. Although the flow of the processing performed by the population distribution calculation unit 604 is similar to the flow of the processing in Figs. 8 and 9 explained in the second embodiment, the weight calculation processing in Step S202C in Fig. 9 is different from the second embodiment. The weight calculation processing according to the fourth embodiment will be therefore explained hereinafter with reference to Figs. 22 and 23. Although Fig. 22 illustrates an example of the flowchart of the weight calculation processing, the flow of the weight calculation processing is not limited to the flow illustrated in Fig. 22.

As illustrated in Fig. 22, the population distribution calculation unit 604 determines whether or not at least one of the "first time difference between an immediately preceding location registration time and a target time m" and the "second time difference between an immediately following location registration time and the target time n" calculated in Step S202B in Fig. 9 is longer than the period t (Step S301 in Fig. 22). When both the first time difference m and the second time difference n are not longer than the period t, it can be determined that both the immediately preceding and immediately following location registration signals are a location registration signal of which the time difference is a normal value. The population distribution calculation unit 604, therefore as is the case with the second embodiment, calculates a value obtained by dividing the second time difference n by the sum of the first time difference m and the second time difference n as the weight of the immediately preceding location registration signal, and calculates a value obtained by dividing the first time difference m by the sum of the first time difference m and the second time difference n as the weight of the immediately following location registration signal (Step S302).

When at least one of the first time difference m and the second time difference n is longer than the period t in Step S301, the weight of the location registration signal corresponding to the time difference longer than the period t is set to be 0 (Step S303).

Next, whether or not both the first time difference m and the second time difference n are longer than the period t is determined (Step S304), and when both the first time difference m and the second time difference n are longer than the period t, the processing in Fig. 22 is terminated. In this case, through the processing in Step S303, the weights of both the immediately preceding and immediately following location registration signals are set to be 0.

When either one time difference is not longer than the period t, the weight of the location registration signal corresponding to the time difference not longer than the period t (that is, the location registration signal of which the time difference is a normal value) is set to be 1 (Step S305A).

Through the processing in Fig. 22, a weight is set for each of the immediately preceding and immediately following location registration signals.

A specific example will be explained using Fig. 23. As illustrated in Fig. 23, a case is assumed, in which as location registration signals for a user $\alpha$, with a target time (14:00), an immediately preceding location registration signal (the location registration time: 13:30, the presenting sector: area A) and an immediately following location registration signal (the location registration time: 15:00, the presenting sector: area B) are extracted. The period t of the periodic location registration is 54 minutes.

In this case, the first time difference m between the immediately preceding time and the target time is 30 minutes, and the second time difference n between the immediately following time and the target time is 60 minutes. Since the second time difference n is longer than the period t (54 minutes), the weight of the immediately following registration signal is 0. On the other hand, since the first time difference m is not longer than the period t (54 minutes), the weight of the immediately preceding location registration signal is 1. A calculation result is therefore obtained, in which the user $\alpha$ exists in the area A that is the presenting sector related to the immediately preceding location registration signal at a target time of 14:00 with one person's worth of weight.

According to the fourth embodiment, out of the location registration signals immediately preceding and immediately following target time, a location registration signal of which the time difference between the location registration time and the target time is longer than the period t is regarded as a location registration signal of which the time difference is a normal value, and the weight is set to 0. Therefore, with the location registration signal of which the time difference is an abnormal value excluded, more precise weight calculation processing can be performed.

[Fifth embodiment]

The fifth embodiment is also an alternative embodiment of Step S202C (weight calculation processing) in Fig.

9 in the second embodiment. In the fifth embodiment, for a location registration signal of which the time difference is not longer than a predetermined reference value (the "period t" as is the case with the fourth embodiment) (that is, a location registration signal of which the time difference is a normal value), the weight is calculated in accordance with the difference between the period t and the above-described time difference.

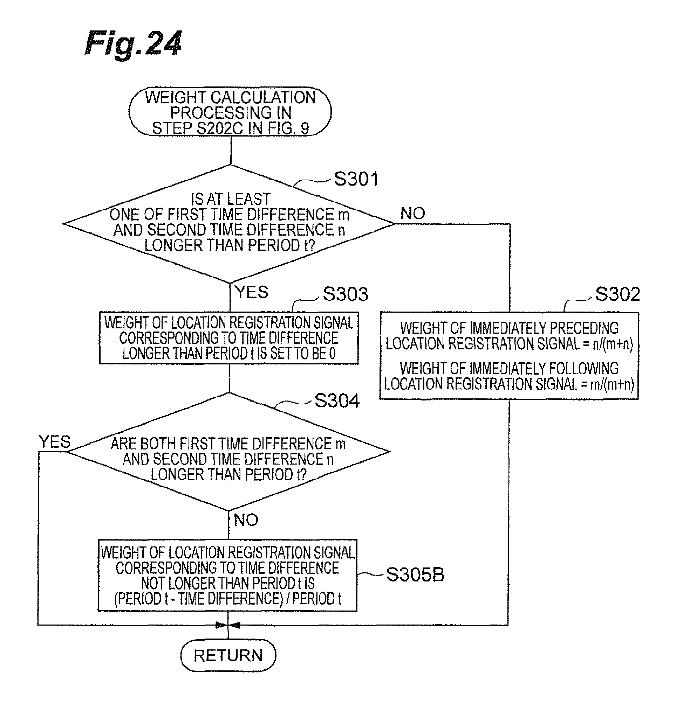

Since the fifth embodiment is similar to the first embodiment in the system structure of the communication system 10 in Fig. 1 and the functional block configuration of the communication system 10 in Fig. 2, redundant explanations will be omitted. Although the flow of the processing performed by the population distribution calculation unit 604 is similar to the flow of the processing in Figs. 8 and 9 explained in the second embodiment, the weight calculation processing in Step S202C in Fig. 9 is different from the second embodiment, the weight calculation processing according to the fifth embodiment will be explained hereinafter with reference to Figs. 23 and 24. Although Fig. 24 illustrates an example of the flowchart of the weight calculation processing, the flow of the weight calculation processing is not limited to the flow illustrated in Fig. 24.

As illustrated in Fig. 24, the population distribution calculation unit 604 determines whether or not at least one of the "first time difference between an immediately preceding location registration time and a target time m" and the "second time difference between an immediately following location registration time and the target time n" calculated in Step S202B in Fig. 9 is longer than the period t (Step S301 in Fig. 24). When both the first time difference m and the second time difference n are shorter than or equal to the period t, it can be determined that both the immediately preceding and immediately following location registration signals are a location registration signal of which the time difference is a normal value. The population distribution calculation unit 604, therefore as is the case with the second embodiment, calculates a value obtained by dividing the second time difference n by the sum of the first time difference m and the second time difference n as the weight of the immediately preceding location registration signal, and calculates a value obtained by dividing the first time difference m by the sum of the first time difference m and the second time difference n as the weight of the immediately following location registration signal (Step S302).

When at least one of the first time difference m and the second time difference n is longer than the period t in Step S301, the weight of the location registration signal corresponding to the time difference longer than the period t is set to be 0 (Step S303).

Then, whether or not both the first time difference m and the second time difference n are longer than the period t is determined (Step S304), and when both the first time difference m and the second time difference n are longer than the period t, the processing in Fig. 24 is terminated. In this case, through the processing in Step S303, the weights of both the immediately preceding and immediately following location registration signals are set to be 0.

When at least one of the time differences is not longer than the period t, the weight of the location registration signal corresponding to the time difference not longer than the period t (that is, the location registration signal of which the time difference is a normal value) is calculated in accordance with the difference between the period t and the time difference (Step S305B). Here, for example, using the following formula (1), the weight is calculated in accordance with the difference between the period t and the time difference.

$$\text{Weight} = (\text{period t} - \text{time difference}) / \text{period t} \quad (1)$$

Through the processing in Fig. 24, a weight is set for each of the immediately preceding and immediately following location registration signals.

A specific example will be explained using Fig. 23. As illustrated in Fig. 23, a case is assumed, in which as location registration signals for a user $\alpha$, with a target time (14:00), an immediately preceding location registration signal (the location registration time: 13:30, the presenting sector: area A) and an immediately following location registration signal (the location registration time: 15:00, the presenting sector: area B) are extracted. The period t of the periodic location registration is 54 minutes.

In this case, the first time difference m between the immediately preceding time and the target time is 30 minutes, and the second time difference n between the immediately following time and the target time is 60 minutes. Since the second time difference n is longer than the period t (54 minutes), the weight of the immediately following registration signal is 0.

Since the first time difference m is not longer than the period t (54 minutes), the weight of the immediately preceding location registration signal is, according to formula (1), (54-30)/54 = 24/54. A calculation result is therefore obtained, in which the user $\alpha$ exists in the area A that is the presenting sector related to the immediately preceding location registration signal at the target time 14:00 with a "24/54" person's worth of weight.

A way of thinking for calculating a weight as described above using the example in Fig. 23. For example, as in Fig. 23, assuming a case in which the location registration signal immediately following the target time is regarded as a location registration signal of which the time difference is an abnormal value, and the weight is calculated based on only the immediately preceding location registration signal in the area A, the location registration signal of the periodic location registration must be generated essentially 54 minutes after the time of registration of the location registration signal (13:30) in the area A. However, when the location registration signal of the periodic location registration is not generated 54 minutes later, it can be regarded that the mobile station is turned off or out of range at the time of 54 minutes later (14:24).

A time when the mobile station was turned off or became out of range is any time in a time zone of 54 minutes from the time of generation of the location registration signal (13:30) in the area A (that is, 13:30 to 14:24). Assuming that a probability of the occurrence of an event in which the mobile station is turned off or becomes out of range is uniform chronologically, for example, at a target time of 14:00, which is in the midway of the above-described time zone (13:30 to 14:24), the mobile station is turned off or out of range with a probability of "the time difference between the target time and the time of generation of the location registration signal in the area A (30 minutes)/54 minutes", and on other hand, the mobile station exists in the area A with a probability of "(54-30)/54 = 24/54".

Based on the foregoing way of thinking, therefore, in the above-described example, the user $\alpha$ exists in the area A at a target time of 14:00 with a "24/54" person's worth of weight. In other words, at a target time of 14:00, a "30/54" person's worth of the user $\alpha$ is regarded that "the mobile station is turned off or out of range".

According to the fifth embodiment, with a location registration signal of which the time difference between the location registration time and the target time is longer than the period t of the periodic location registration (that is, a location registration signal of which the time difference is an abnormal value) excluded, a more precise weight calculation processing can be performed. In addition, for a location registration signal of which the time difference is a normal value, the weight is calculated in accordance with the difference between the period t (54 minutes) and the "difference between the target time and the time of generation of the signal", thereby allowing the weight of the location registration signal of which the time difference is a normal value to be determined more precisely.

[Sixth embodiment]

The following sixth embodiment corresponds to an alternative example of the second embodiment. Processing will be explained, in which out of the location registration signals, a weight determined from a location registration signal before removing a location registration signal by LA crossing and a weight determined from a location registration signal after removing the location registration signal by LA crossing are proportionally divided, and population distribution is determined from the proportionally divided weights. Since a sector facing an LA boundary has a relatively high probability that a location registration signal by LA crossing is generated as compared to a sector that does not face the LA boundary. To suppress precision degradation in population distribution calculation caused by such an inter-sector imbalance, a weight determined from a location registration signal before removing a location registration signal by LA crossing and a weight determined from a location registration signal after removing the location registration signal by LA crossing are proportionally divided as described above.

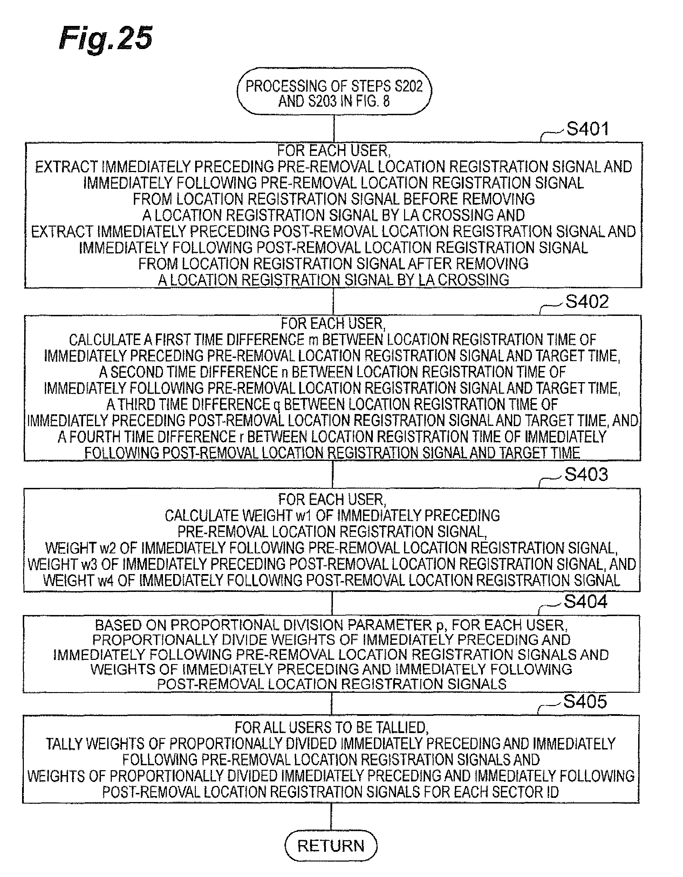

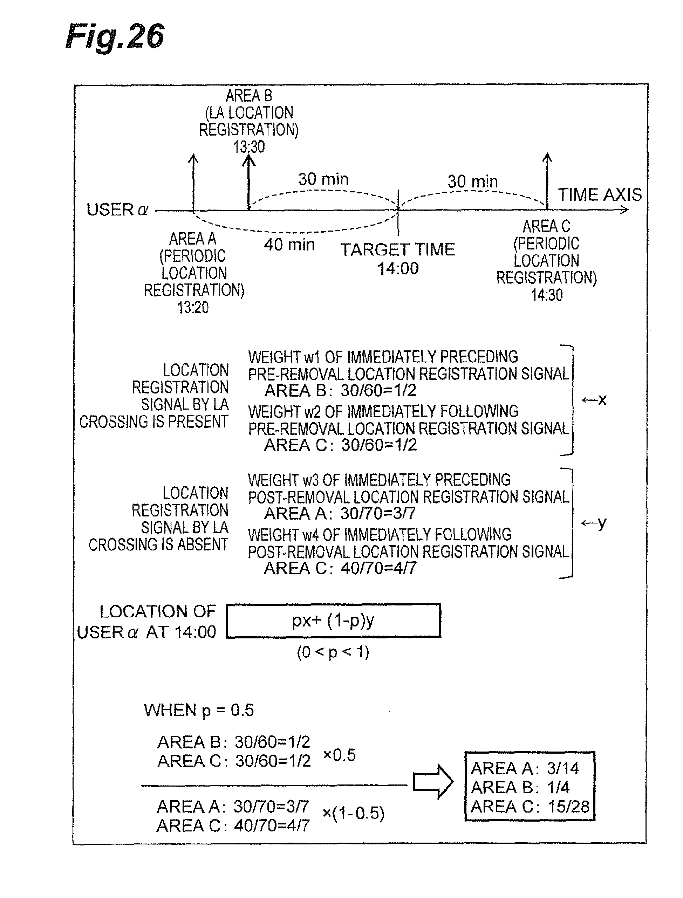

Since the sixth embodiment is similar to the first embodiment in the system structure of the communication system 10 in Fig. 1 and the functional block configuration of the communication system 10 in Fig. 2, redundant explanations will be omitted. Although the flow of the processing performed by the population distribution calculation unit 604 is similar to the flow of the processing in Figs. 8 explained in the second embodiment, the weight calculation processing in Step S202C and the weight tallying processing in Step S203 in Fig. 8 are different from the second embodiment. These pieces of processing will be therefore explained hereinafter with reference to Figs. 25 and 26.

The extracting unit 603, after receiving target time information from the target time input unit 606, extracts a location registration signal immediately preceding a target time (hereinafter referred to as the "immediately preceding pre-removal location registration signal") and a location registration signal immediately following it (hereinafter referred to as the "immediately following pre-removal location registration signal") from a location registration signal before removing a location registration signal by LA crossing and extracts a location registration signal immediately preceding a target time (hereinafter referred to as the "immediately preceding post-removal location registration signal") and a location registration signal immediately following it (hereinafter referred to as the "immediately following post-removal location registration signal") from a location registration signal after removing a location registration signal by LA crossing as illustrated in Fig. 25, for each user (Step S401 in Fig. 25).

The location registration signal includes information (for example, an identification flag) in accordance with a cause from which the signal has been generated (LA crossing, performance of attach processing by the turning on of the mobile station 100, etc., and performance of detach processing by the turning off of the mobile station 100, etc., periodic location registration, etc.). The extracting unit 603 can remove the location registration signal by LA crossing by determining whether or not a location registration signal is the location registration signal by LA crossing through, for example, the identification flag included in the location registration signal.

The extracted four location registration signals for each user are sent to the population distribution calculation unit 604, and for each user, a first difference m between the location registration time of the immediately preceding pre-removal location registration signal and the target time, a second difference n between the location registration time of the immediately following pre-removal location registration signal and the target time, a third difference q between the location registration time of the immediately preceding post-removal location registration signal and the target time, and a fourth difference r between the location registration time of the immediately following post-removal location registration signal and the target time are calculated (Step S402). For each user, by the procedure similar to the second embodiment, from the first to fourth time differences, a weight w1 of the immediately preceding pre-removal location registration signal, a weight w2 of the immediately following pre-removal location registration signal, a weight w3 of the immediately preceding post-removal location registration signal, and a weight w4 of the immediately following post-removal location registration signal are calculated (Step S403). For example, the weights w1 to w4 can be calculated by the following formulae (2) to (5).

$$\text{The weight of the immediately preceding pre-removal location registration signal } w1 = n/(m+n) \quad (2)$$

$$\text{The weight of the immediately following pre-removal location registration signal } w2 = m/(m+n) \quad (3)$$

$$\text{The weight of the immediately preceding post-removal location registration signal } w3 = r/(q+r) \quad (4)$$

$$\text{The weight of the immediately following post-removal location registration signal } w4 = q/(r+q) \quad (5)$$

The population distribution calculation unit 604 proportionally divides the weights of the immediately preceding and immediately following pre-removal location registration signals and the weights of the immediately preceding and immediately following post-removal location registration signals for each user based on a preset proportional division parameter p (Step S404). The preset proportional division parameter p and proportional division here will be described later using Fig. 26.

Furthermore, the population distribution calculation unit 604 tallies the weights of the proportionally divided immediately preceding and immediately following pre-removal location registration signals, and the weights of the proportionally divided immediately preceding and immediately following post-removal location registration signals for all users to be tallied for each sector (Step S405).

Hereinafter, a specific example will be explained using Fig. 26. As exemplified in Fig. 26, in a case in which a location registration signal by the periodic location registration generated at 13:20 in the area A, a location registration signal by LA crossing generated at 13:30 in the area B, and a location registration signal by the periodic location registration generated at 14:30 in the area C exist, the immediately preceding pre-removal location registration signal is the location registration signal generated at 13:20 in the area A, while the immediately preceding post-removal location registration signal is the location registration signal generated at 13:30 in the area B. Since the first time difference m = 30 minutes, second time difference n = 30 minutes, third time difference q = 40 minutes, and fourth time difference r = 30 minutes, the weights w1 to w4 are calculated as follows:

The weight w1 of the immediately preceding pre-removal location registration signal = 30/(30+30) = 1/2
The weight w2 of the immediately following pre-removal location registration signal = 30/(30+30) = 1/2
The weight w3 of the immediately preceding post-removal location registration signal = 30/(40+30) = 3/7
The weight w4 of the immediately following post-removal location registration signal = 40/(40+30) = 4/7

Assuming that a group of the weights w1 and w2 determined from the location registration signals before removing the location registration signal by LA crossing (the weights of the immediately preceding and immediately following pre-removal location registration signals) be x, and a group of the weights determined from the location registration signals after removing the location registration signal by LA crossing (the weights of the immediately preceding and immediately following post-removal location registration signals) w3 and w4 be y, then in order to determine the location of the user $\alpha$ at a target time of 14:00, x and y are proportionally divided by applying x and y and the proportional division parameter p (0 < p < 1) to the following formula (6).

$$Px + (1-p)y \quad (6)$$

The proportional division parameter p is a parameter for optimizing population distribution calculation by proportionally dividing the weights of the immediately preceding and immediately following pre-removal location registration signals and the weights of the immediately preceding and immediately following post-removal location registration signals, and its value is preset from, for example, the moving velocity of a user, the occurrence ratio of location registration by LA crossing in an LA boundary and the periodic location registration, etc.

For example, when the proportional division parameter p = 0.5, as illustrated in the lowermost column of the Fig. 26, the group x of the weights w1 and w2 and the group y of the weights w3 and w4 are proportionally divided into 0.5 each. After the proportional division, the weight of the immediately preceding pre-removal location registration signal generated in the area B is 1/4, the weight of the immediately following pre-removal location registration signal generated in the area C is 1/4, the weight of the immediately preceding post-removal location registration signal generated in the area A is 3/14, and the weight of the immediately following post-removal location registration signal generated in the area C is 2/7. The above-described weights after proportional division are tallied for each sector ID. In the above-described example, the weight concerning the location of the user $\alpha$ at a target time of 14:00 is determined to be 3/14 for the area A, 1/4 for the area B, and 15/28 (that is, the sum of 1/4 and 2/7) for the area C.

According to the sixth embodiment, by proportionally dividing the weights determined from the location registration signals before removing the location registration signal by LA crossing and the weights determined from the location registration signals after removing the location registration signal by LA crossing, precision degradation in population distribution calculation caused by an inter-sector imbalance in which a probability that a location registration signal by LA crossing is different sector by sector (for example, between a sector facing an LA boundary and a sector not facing it) can be suppressed.

The weight calculation processing in the fourth or fifth embodiment can be applied to the sixth embodiment. In other words, the weight calculation processing in the fourth or fifth embodiment can be applied to the weight calculation processing in Step S403 in Fig. 25. In that case, with a location registration signal of which the time difference between the location registration time and the target time is longer than the period t of the periodic location registration (that is, a location registration signal of which the time difference is an abnormal value) excluded, appropriate weight calculation processing can be performed, and besides, the precision degradation in population distribution calculation caused by an inter-sector imbalance can be suppressed.

(Area conversion processing)

According to the first to sixth embodiments, population distribution by sector at a target time can be obtained. The population distribution by sector as the tallying unit may be converted into an estimated value for each output unit that is different from the tallying unit (a mesh in this example) as described below. Although the following conversion processing may be performed by the population distribution calculation unit 604 or performed by the output unit 605, an example performed by the output unit 605 will be described hereinafter.

Hereinafter, (1) processing in an environment in which the communication area of exterior stations utilizing a single frequency band exists and (2) processing in an environment in which the communication area of interior stations and two or more of a plurality of communication areas of exterior stations utilizing frequency bands having different radio coverage exist in a geographically overlapped manner will be explained in order.

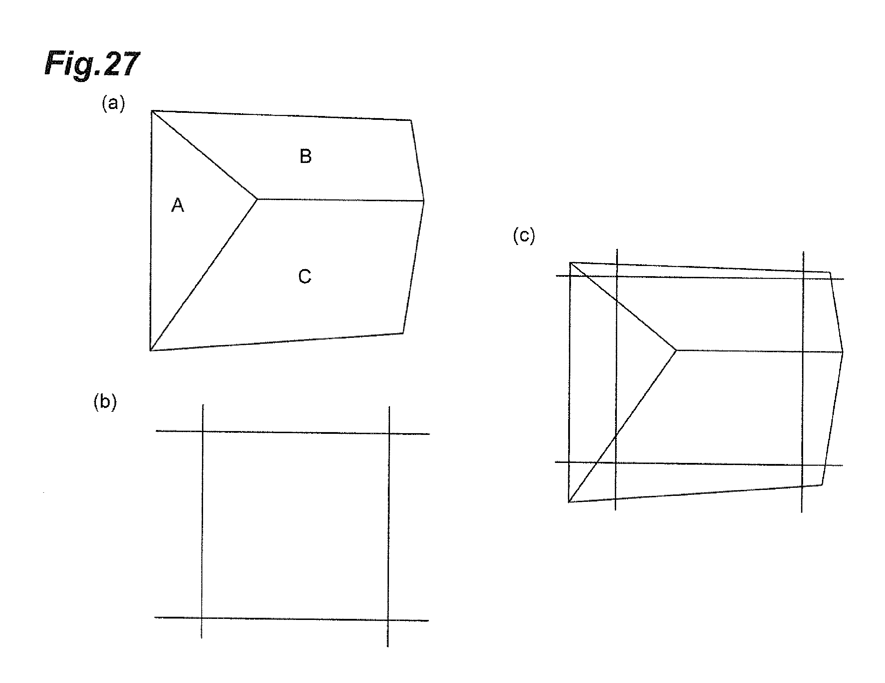

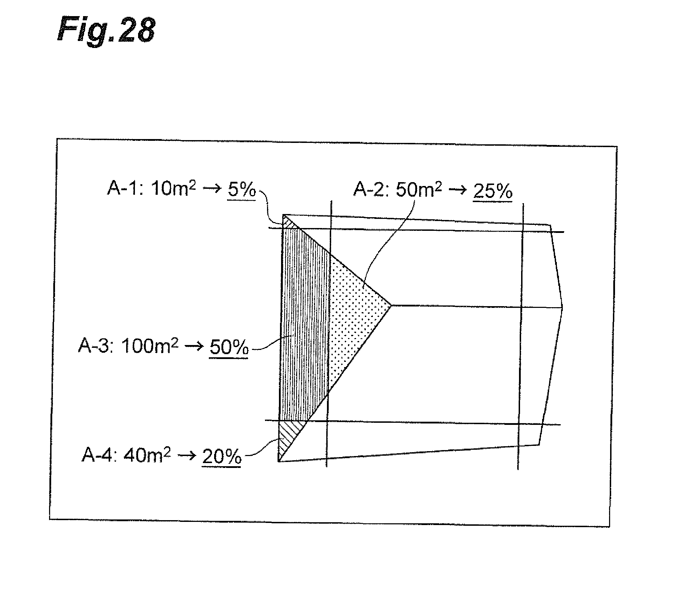

First, (1) processing in an environment in which the communication area of exterior stations utilizing a single frequency band exists will be explained. The output unit 605 combines an area diagram reproduced based on are boundary information stored in advance (see Fig. 27(a)) and a two-dimensional mesh reproduced based on a predetermined dividing rule (see Fig. 27(b)) to obtain a combined diagram illustrated in Fig. 27(c). The output unit 605 then divides each area along mesh boundaries in the combined diagram above. For example, as illustrated in Fig. 28, the area A in Fig. 27(a) is divided into four divided areas A-1, A-2, A-3, and A-4. The output unit 605 then calculates the area of each divided area and calculates the area ratio of each divided area. For example, as illustrated in Fig. 28, assuming that the areas of the divided areas A-1, A-2, A-3, and A-4 have been calculated to be 10 $m^2$, 50 $m^2$, 100 $m^2$, and 40 $m^2$, respectively, the area ratios (for example in percentage) of the divided areas A-1, A-2, A-3, and A-4 are calculated to be 5%, 25%, 50%, and 20%, respectively.

It is not essential that the output unit 605 calculates the area ratio of each divided area. A structure may be adopted, in which the area ratio of each divided area is determined in advance and the output unit 605 can refer to the information of the area of each divided area through a table (not shown) within the information analysis device 600 or externally.

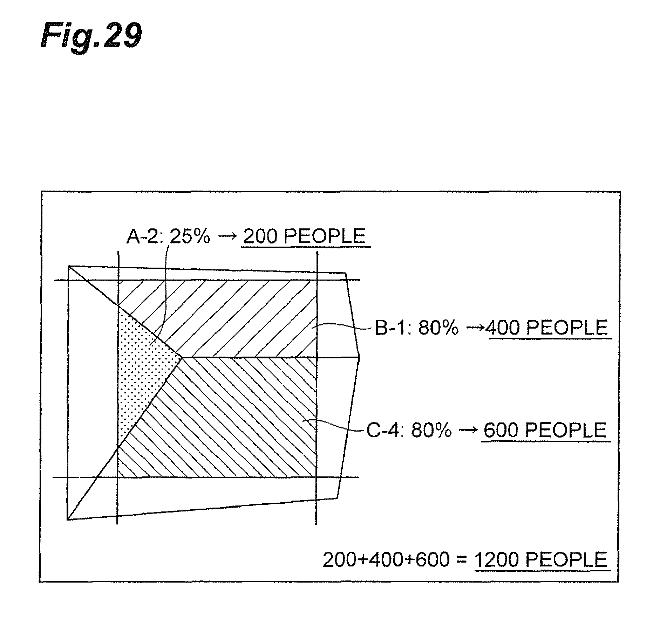

The output unit 605 then calculates the population of each divided area. For example, assuming that the population of the area A in Fig. 27(a) is 800 people, as illustrated in Fig. 29, the population of the divided area A-2 is calculated to be 200 people (that is, 800 people multiplied by 25%). Similarly, assuming that the populations of the areas B and C are 500 people and 750 people, respectively, the population of the divided area B-1 with an area ratio of 80% in the area B is calculated to be 400 people (that is, 500 people multiplied by 80%), and the population of the divided area C-4 with an area ratio of 80% in the area C is calculated to be 600 people (that is, 750 people multiplied by 80%).

Furthermore, the output unit 605 calculates the sum of the populations of a plurality of divided areas included in one mesh to calculate the population of the mesh. In the example in Fig. 29, the sum of the populations of the divided areas A-2, B-1, and C-4 included in one mesh is calculated to be 1200 people (that is, 200 people + 400 people + 600 people), and the 1200 people is regarded as the population of the mesh.

As described above, in an environment in which the communication area of exterior stations utilizing a single frequency band exists, population for each tallying unit can be converted into population for each output unit.

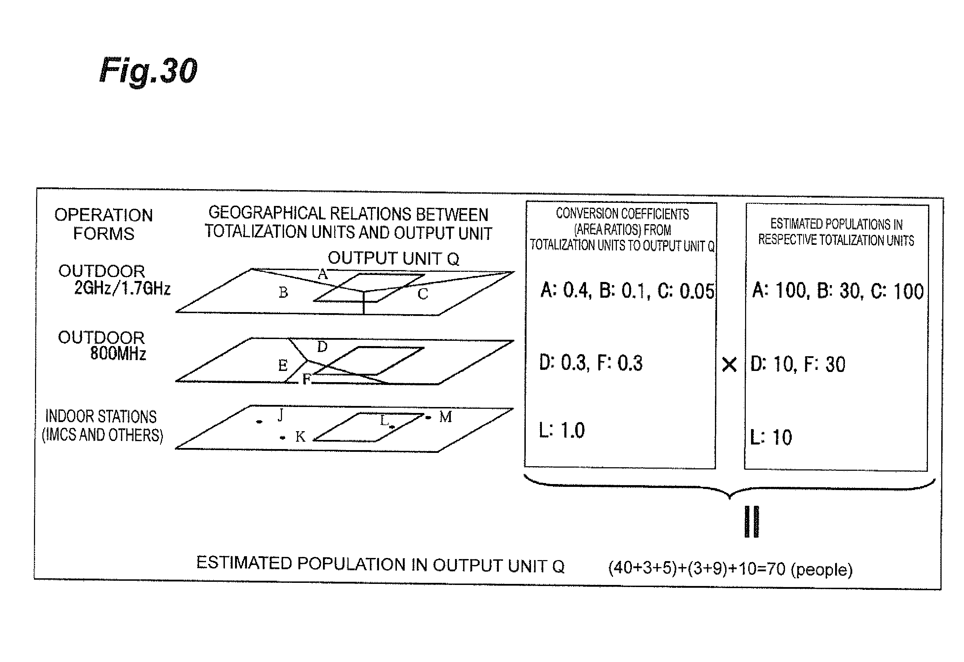

Next, (2) processing in an environment in which the communication area of interior stations and two or more of a plurality of communication areas of exterior stations utilizing frequency bands having different radio coverage exist in a geographically overlapped manner will be explained in order. As illustrated in Fig. 30, in the environment in which the communication area of interior stations and a plurality of communication areas of exterior stations utilizing frequency bands having different radio coverage (exterior 2 GHz/1.7 GHz and exterior 800 MHz) exist in a geographically overlapped manner, the output unit 605 performs the (1) processing in an environment in which the communication area of exterior stations utilizing a single frequency band exists for each communication area, thereby determining the population for each output unit (mesh) concerning each communication area, and finally adds up populations concerning each communication area for each output unit, thereby obtaining the population for each output unit.

In the example in Fig. 30, the output unit 605 first performs the (1) processing in an environment in which the communication area of exterior stations utilizing a single frequency band exists for each of the communication area of exterior stations utilizing exterior 2 GHz/1.7 GHz, the communication area of exterior stations utilizing exterior 800 MHz, and the communication area of interior stations. For example, assuming that in the communication area of exterior stations utilizing exterior 2 GHz/1.7 GHz, the divided area in which the output unit Q and the area A overlap has an area ratio of 40% with respect to the entire area A, by multiplying an estimated population of the area A of 100 people by the area ratio 0.4, an estimated population of the divided area in which the output unit Q and the area A overlap of 40 people is obtained. Similarly, an estimated population of the area in which the output unit Q and the area B overlap of 3 people (an estimated people of the area B of 30 people multiplied by an area ratio of 0.1) and an estimated population of the area in which the output unit Q and the area C overlap of 5 people (an estimated people of the area C of 100 people multiplied by an area ratio of 0.05) are obtained. Also for the communication area exterior 800 MHz, similarly, an estimated population of the area in which the output unit Q and the area D overlap of 3 people (an estimated people of the area B of 10 people multiplied by an area ratio of 0.3) and an estimated population of the area in which the output unit Q and the area F overlap of 9 people (an estimated people of the area C of 30 people multiplied by an area ratio of 0.3) are obtained. For the interior stations, by contrast, since the area, or the radio coverage of each interior station, is extremely small, and in the example of Fig. 30, the entire area L of one interior station and the output unit Q overlap, the area ratio is considered to be 100%. By multiplying an estimated population of the area L of 10 people by an area ratio of 1.0, therefore, an estimated population of the area in which the output unit Q and the area L overlap (the entire area L in this example) of 10 people is obtained.

Finally, the output unit 605 adds up the estimated populations of the areas in which the output unit Q and each area overlap to obtain an estimated population of the output unit Q of 70 people. As described above, the population for each tallying unit can be converted into the estimated population of the output unit Q. Although Fig. 30 illustrates conversion into the estimated population of one output unit Q, by performing similar processing for other output units, conversion into the estimated populations of all target output units can be performed.

As described above, in an environment in which the communication area of interior stations and two or more of a plurality of communication areas of exterior stations utilizing frequency bands having different radio coverage exist in a geographically overlapped manner, the population for each tallying unit can be converted into the population for each output unit.

The above-described area conversion processing may be performed only when the population by sector into the population by unit other than a sector (for example, by mesh), but before the scaling estimation processing described in the first embodiment (the processing for converting the number of terminals into population). In other words, the number of terminals by sector may be converted into the number of terminals by a unit other than sector (for example, by mesh), and thereafter, the number of terminals by unit after conversion (for example, by mesh) is converted into population by the scaling estimation processing, thereby determining population distribution by unit after conversion (for example, by mesh).

In the population distribution calculation in the first to sixth embodiments, conditions and divisions for population distribution calculation can be set for each attribute of users, each time, and each place. For example, by narrowing down location data for use in population distribution calculation (for example, a location registration signal) to location data of users having a specific attribute (for example, a location registration signal), conditions for population distribution calculation can be set for each attribute of users. By narrowing down a target time to a specific range of time zone, conditions for time zone can be set. The target time may be set to be a specific time in a plurality of days based on a predetermined period (for example, weekdays (Monday to Friday)). Furthermore, by converting population (or the number of terminals) by sector is converted into population by unit other than sector (for example, by mesh) by the above-described area conversion processing, area division in population distribution calculation can be freely set.

[Seventh embodiment]

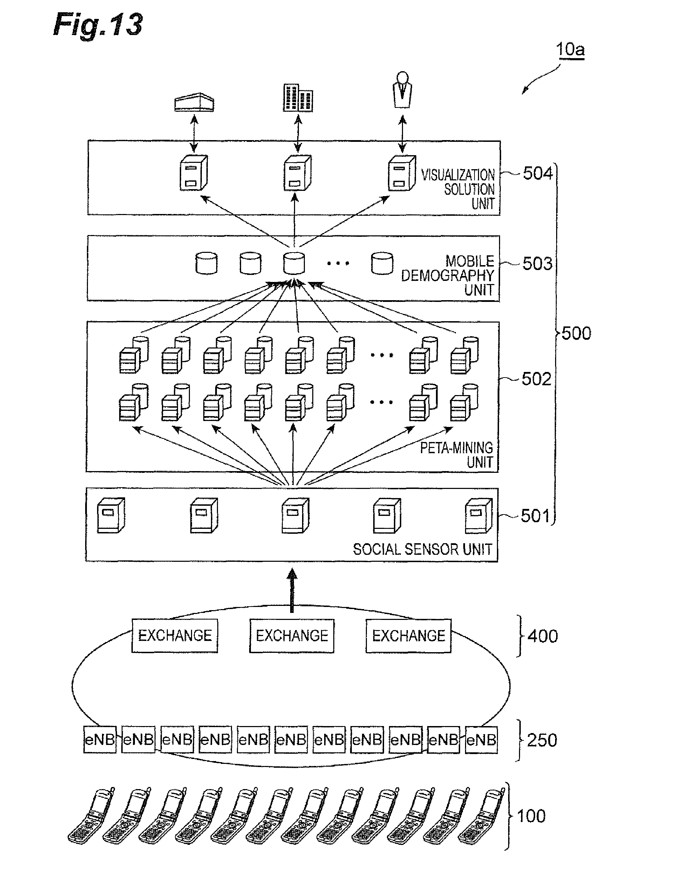

Fig. 13 is a diagram illustrating the system structure of a communication system 10 of the seventh embodiment. As illustrated in Fig. 13, this communication system 10 is a system structure when the LTE (Long Term Evolution), or a new communication mode, is applied, and is configured to include mobile stations 100, eNBs (Evolution Node B) 250, exchanges 400, and a management center 500. The management center 500 includes social sensor units 501, peta-mining units 502, mobile demography units 503, and visualization solution units 504. The eNB 250 includes the functions of both the BTS 200 and the RNC 300.

Since the seventh embodiment is a system structure when applied to the LTE, and its specific processing details are the same as those of the first to sixth embodiments, its detailed explanations will be omitted. The protocol in the first to sixth embodiments is the RANAP (Radio Access Network Application Part), and in the seventh embodiment, the S1AP (S1 Application protocol) for use in the LTE is used. For the Initial UE Message, the same signal is used in the S1AP.

Although the first to seventh embodiments were explained on the premise of the third generation cellular phone (3G), they can be applied to the GSM (Global System of Mobile Communications).

Reference Signs List

10, 10a: communication system, 100: mobile station, 200: BTS, 250: eNB, 300: RNC, 302: RNC communication controller, 303: location registration signal receiver, 304: signal-number measuring unit, 400: exchange, 401: exchange communication controller, 402: converter, 403: storage unit, 404: location registration signal processing unit, 500: management center, 501: social sensor unit, 502: peta-mining unit, 503: mobile demography unit, 504: visualization solution unit, 600: information analysis device, 601: information analysis device communication controller, 602: holding unit, 603: extracting unit, 604: population distribution calculation unit, 605: output unit, 606: target time input unit, 607: attribute information holding unit.

**Claims**

1. An information analysis device comprising:

   a receiving unit for receiving a location registration signal including a sector ID, location registration time information and a user ID subjected to location registration, from outside;
   an extracting unit for extracting a location registration signal of which the location registration time is immediately preceding a target time and a location registration signal of which the location registration time is immediately following the target time, from the location registration signal for each user; and
   a population distribution calculation unit for calculating population distribution by sector at the target time based on location registration time information and a location corresponding to the sector ID included in the location registration signal immediately preceding the target time for each user, location registration time information and a location corresponding to the sector ID included in the location registration signal immediately following the target time for each user, and the target time.

2. The information analysis device according to claim 1, wherein
   the population distribution calculation unit calculates the population distribution by sector at the target time,
   by calculating a first time difference between an immediately preceding location registration time and the target time and a second time difference between an immediately following location registration time and the target time, for each user,
   calculating a weight of an immediately preceding location registration signal and a weight of an immediately following location registration signal based on the first time difference and the second time difference for each user, and

tallying by sector the weight of the immediately preceding location registration signal and the weight of the immediately following location registration signal for all users to be tallied.

3. The information analysis device according to claim 2, wherein
the population distribution calculation unit calculates a value obtained by dividing the second time difference by the sum of the first time difference and the second time difference, as the weight of the immediately preceding location registration signal and
calculates a value obtained by dividing the first time difference by the sum of the first time difference and the second time difference, as the weight of the immediately following location registration signal.

4. The information analysis device according to claim 2, wherein when at least one of the first time difference and the second time difference is longer than a preset reference value, the population distribution calculation unit sets the weight of a location registration signal corresponding to a time difference longer than the reference value to be 0.

5. The information analysis device according to claim 4, wherein when only one of the first time difference and the second time difference is longer than the reference value, the population distribution calculation unit sets the weight of a location registration signal corresponding to a time difference not longer than the reference value to be 1.

6. The information analysis device according to claim 4, wherein when only one of the first time difference and the second time difference is longer than the reference value, the population distribution calculation unit calculates a value obtained by dividing the difference between the reference value and the time difference not longer than the reference value by the reference value, as the weight of the location registration signal corresponding to the time difference not longer than the reference value.

7. The information analysis device according to claim 1, wherein
the extracting unit extracts, out of the location registration signals for each user, an immediately preceding pre-removal location registration signal which is a location registration signal of which the location registration time is immediately preceding the target time, and an immediately following pre-removal location registration signal which is a location registration signal of which the location registration time is immediately following the target time, from a location registration signal before removing a location registration signal generated caused by the fact that a terminal has crossed a boundary between location registration areas and extracts, out of the location registration signals for each user, an immediately preceding post-removal location registration signal which is a location registration signal of which the location registration time is immediately preceding the target time, and an immediately following post-removal location registration signal which is a location registration signal of which the location registration time is immediately following the target time, from a location registration signal after removing a location registration signal generated caused by the fact that a terminal has crossed a boundary between location registration areas,
the population distribution calculation unit calculates a first time difference between the location registration time of the immediately preceding pre-removal location registration signal and the target time, a second time difference between the location registration time of the immediately following pre-removal location registration signal and the target time, a third time difference between the location registration time of the immediately preceding post-removal location registration signal and the target time, and a fourth time difference between the location registration time of the immediately following post-removal location registration signal and the target time, for each user,
calculates the weight of the immediately preceding pre-removal location registration signal and the weight of the immediately following pre-removal location registration signal based on the first time difference and the second time difference, calculates the weight of the immediately preceding post-removal location registration signal and the weight of the immediately following post-removal location registration signal based on the third time difference and the fourth time difference, for each user,
divides proportionally the weights of the immediately preceding and immediately following pre-removal location registration signals and the weights of the immediately preceding and immediately following post-removal location registration signals based on a preset proportional division parameter, for each user, and
tallies the weights of the proportionally divided immediately preceding and immediately following pre-removal location registration signals and the weights of the proportionally divided immediately preceding and immediately following post-removal location registration signals for all users to be tallied for each sector.

8. The information analysis device according to claim 1, wherein
the population distribution calculation unit calculates population distribution by sector at a target time by:

generating a plurality of points corresponding to transit points at predetermined time intervals when moving with constant velocity from an immediately preceding location registration time to an immediately following location registration time on a line connecting between a location corresponding to a sector ID included in a location registration signal immediately preceding the target time and a location corresponding to a sector ID included in a location registration signal immediately following the target time, for each user, and generating a virtual location registration signal for a sector in which the generated point is included for each user,

extracting the location registration signal at the target time from the virtual location registration signals for all users to be tallied, and

tallying the number of extracted location registration signals at the target time for each sector.

9. The information analysis device according to claim 1, wherein
the population distribution calculation unit calculates population distribution by sector at a target time by:

generating a plurality of points corresponding to transit points at predetermined time intervals when moving with constant velocity from an immediately preceding location registration time to an immediately following location registration time on a line connecting between a location corresponding to a sector ID included in a location registration signal immediately preceding the target time and a location corresponding to a sector ID included in a location registration signal immediately following the target time, for each user,

generating a virtual location registration signal for a sector in which the generated point is included, and

tallying the number of generated location registration signals at the target time for each sector.

10. The information analysis device according to claim 1, wherein
the population distribution calculation unit calculates population distribution by sector at a target time by:

generating, based on a ratio correlated to the inter-area relative ratio of intra-area moving velocities in an area of which the boundary can be associated with sector boundaries, a plurality of points corresponding to transit points at predetermined time intervals when moving from an immediately preceding location registration time to an immediately following location registration time on a line connecting between a location corresponding to a sector ID included in a location registration signal immediately preceding the target time and a location corresponding to a sector ID included in a location registration signal immediately following the target time, for each user, and generating a virtual location registration signal for a sector in which the generated point is included for each user,

extracting the location registration signal at the target time from the virtual location registration signals for all users to be tallied, and

tallying the number of extracted location registration signals at the target time for each sector.

11. The information analysis device according to claim 1, wherein
the population distribution calculation unit calculates population distribution by sector at a target time by:

generating, based on a ratio correlated to the inter-area relative ratio of intra-area moving velocity in an area of which the boundary can be associated with a sector boundary, a plurality of points corresponding to transit points at predetermined time intervals when moving from an immediately preceding location registration time to an immediately following location registration time on a line connecting between a location corresponding to a sector ID included in a location registration signal immediately preceding the target time and a location corresponding to a sector ID included in a location registration signal immediately following the target time, for each user,

generating a virtual location registration signal for a sector in which the point corresponding to the target time is included, and

tallying the number of generated location registration signals at the target time for each sector.

12. The information analysis device according to any one of claims 1 to 11, wherein
the information analysis device further comprises an attribute information holding unit holding attribute information for each user, and
the extracting unit limits target users in accordance with the attribute information and performs the extraction of the immediately preceding and immediately following location registration signals for the limited target users.

13. The information analysis device according to any one of claims 1 to 11, wherein
the information analysis device further comprises an attribute information holding unit holding attribute information for each user, and
the population distribution calculation unit limits target users in accordance with the attribute information and performs the calculation of population distribution by sector at the target time for the limited target users.

**14.** An information analysis device comprising:

a receiving unit for receiving point data including the location of a user, locating time information at which the location information was obtained, and a user ID;
an extracting unit for extracting point data of which the locating time is immediately preceding a target time and point data of which the locating time is immediately following the target time, from the point data for each user; and
a population distribution calculation unit for estimating the location of a user at the target time by complementing the midway between a location indicated by the point data immediately preceding the target time and a location indicated by the point data immediately following the target time for each user and calculating population distribution by predetermined areas to be calculated at the target time based on the estimated location of each user.

**15.** The information analysis device according to claim 14, wherein the population distribution calculation unit generates a plurality of points corresponding to transit points at predetermined time intervals when moving from an immediately preceding locating time to an immediately following locating time on a line connecting between a location indicated by location information included in point data immediately preceding a target time and a location indicated by location information included in point data immediately following the target time for each user, estimates a point corresponding to the target time as the location of the user at the target time, and based on the estimated location of each user, and calculates the population distribution by predetermined areas to be calculated at a target time.

**16.** The information analysis device according to claim 15, wherein, for generating a plurality of points corresponding to transit points at predetermined time intervals, the population distribution calculation unit determines, based on moving characteristics of a user in a generation area in which the points are to be generated, the intervals of the points in the generation area.

**17.** The information analysis device according to claim 16, wherein the moving characteristics of the user in the generation area are the mean moving velocity of the user in the generation area.

**18.** The information analysis device according to claim 16, wherein the moving characteristics of the user in the generation area are the mean staying time of the user in the generation area.

**19.** The information analysis device according to any one of claims 14 to 18, wherein
the information analysis device further comprises an attribute information holding unit holding attribute information for each user, and
the extracting unit limits target users in accordance with the attribute information and extracts the point data immediately preceding and immediately following the target time for the limited target users.

**20.** The information analysis device according to any one of claims 14 to 18, wherein
the information analysis device further comprises an attribute information holding unit holding attribute information for each user, and
the population distribution calculation unit limits target users in accordance with the attribute information and calculates population distribution by predetermined areas to be calculated at the target time for the limited target users.

**21.** The information analysis device according to any one of claims 1 to 20, wherein the population distribution calculation unit calculates the population distribution on a further basis of a scaling factor for converting the number of terminals of users into population.

**22.** The information analysis device according to any one of claims 1 to 21, further comprising:

a target time input unit for inputting a target time.

**23.** The information analysis device according to any one of claims 1 to 22, further comprising:

an output unit for outputting the population distribution information calculated.

**24.** An information analysis method performed by an information analysis device, the information analysis method comprising:

a receiving step of receiving a location registration signal including a sector ID, location registration time information and a user ID subjected to location registration, from the outside;

an extracting step of extracting a location registration signal of which the location registration time is immediately preceding a target time and a location registration signal of which the location registration time is immediately following the target time, from the location registration signal for each user; and

a population distribution calculating step of calculating population distribution by sector at the target time based on location registration time information and a location corresponding to the sector ID included in the location registration signal immediately preceding the target time for each user, location registration time information and a location corresponding to the sector ID included in the location registration signal immediately following the target time for each user, and the target time.

**25.** An information analysis method performed by an information analysis device, the information analysis method comprising:

a receiving step of receiving point data including location information indicating the location of a user, locating time information obtained from the location information, and a user ID from the outside;

an extracting step of extracting point data of which the locating time is immediately preceding a target time and point data of which the locating time is immediately following the target time, from point data for each user; and

a population distribution calculating step of estimating the location of the user at the target time by complementing the midway between a location indicated by the point data immediately preceding the target time and a location indicated by the point data immediately following the target time for each user and calculating population distribution by predetermined areas to be calculated at the target time based on the estimated location of each user.

# Fig.1

# *Fig.2*

10

# Fig.3

BTS — 200

# Fig.4

```
                    ┌─────────────┐
                    │   START     │
                    └──────┬──────┘
                           │
     ┌─────────────────────────────────────────┐
     │ RECEIVE LOCATION REGISTRATION SIGNALS    │───S101
     │          OF ALL USERS                    │
     └─────────────────────┬───────────────────┘
                           │
     ┌─────────────────────────────────────────┐
     │  COMPLEMENTARY PROCESSING OF             │
     │    LOCATION REGISTRATION SIGNAL          │───S102
     │         FOR EACH USER                    │
     └─────────────────────┬───────────────────┘
                           │
     ┌─────────────────────────────────────────┐
     │   EXTRACT LOCATION REGISTRATION SIGNAL   │
     │ AT TARGET TIME AFTER COMPLEMENTATION FOR │───S103
     │      ALL USERS TO BE TALLIED             │
     └─────────────────────┬───────────────────┘
                           │
     ┌─────────────────────────────────────────┐
     │        TALLY THE NUMBER OF               │
     │    LOCATION REGISTRATION SIGNALS OF      │───S104
     │ALL USERS TO BE TALLIED FOR EACH SECTOR ID│
     └─────────────────────┬───────────────────┘
                           │
     ┌─────────────────────────────────────────┐
     │ OUTPUT POPULATION DISTRIBUTION DIAGRAM   │───S105
     │            BY SECTOR                     │
     └─────────────────────┬───────────────────┘
                           │
                    ┌──────┴──────┐
                    │    END      │
                    └─────────────┘
```

# *Fig.5*

```
         ┌────────────────────────────────────┐
         │  COMPLEMENTARY PROCESSING OF       │
         │  LOCATION REGISTRATION SIGNAL      │
         │  FOR EACH USER                     │
         └────────────────────────────────────┘
                          │
  ┌─────────────────────────────────────────────┐
  │  EXTRACT LOCATION REGISTRATION SIGNALS      │
  │  IMMEDIATELY PRECEDING AND IMMEDIATELY      │─── S102A
  │  FOLLOWING TARGET TIME                      │
  └─────────────────────────────────────────────┘
                          │
  ┌─────────────────────────────────────────────────────────┐
  │  GENERATE POINTS AT REGULAR INTERVALS                    │
  │  BETWEEN POINTS CORRESPONDING TO                         │
  │  SECTORS SUBJECTED TO LOCATION REGISTRATION IMMEDIATELY  │─── S102B
  │  PRECEDING AND IMMEDIATELY FOLLOWING TARGET TIME         │
  └─────────────────────────────────────────────────────────┘
                          │
  ┌─────────────────────────────────────────────────────────┐
  │  GENERATE VIRTUAL LOCATION REGISTRATION SIGNAL          │
  │  FOR SECTOR IN WHICH A GENERATED POINT IS INCLUDED      │─── S102C
  └─────────────────────────────────────────────────────────┘
                          │
                   ┌──────────────┐
                   │   RETURN     │
                   └──────────────┘
```

## Fig.6

METHOD FOR GENERATING POINTS

IMMEDIATELY PRECEDING LOCATION REGISTRATION SIGNAL

INTERVAL n [MINUTES]

TARGET TIME

IMMEDIATELY FOLLOWING LOCATION REGISTRATION SIGNAL

A ······ B

m [MINUTES]

WHEN DETERMINING POPULATION BY n MINUTES ⟹ POINTS ARE GENERATED BETWEEN POINTS A AND B AT REGULAR INTERVALS AT n MINUTES INTERVALS.

EP 2 600 302 A1

Fig.7

*Fig.8*

```
                    ┌─────────────┐
                    (    START    )
                    └──────┬──────┘
                           │
        ┌──────────────────┴──────────────────┐
        │             RECEIVE                  │
        │   LOCATION REGISTRATION SIGNALS      ├── S201
        │          OF ALL USERS                │
        └──────────────────┬──────────────────┘
                           │
       ┌───────────────────┴───────────────────┐
       ║  WEIGHT CALCULATION PROCESSING OF      ║
       ║     LOCATION REGISTRATION SIGNAL       ╟── S202
       ║            FOR EACH USER               ║
       └───────────────────┬───────────────────┘
                           │
      ┌────────────────────┴─────────────────────┐
      │           TALLY WEIGHTS OF                │
      │    LOCATION REGISTRATION SIGNALS OF       ├── S203
      │ ALL USERS TO BE TALLIED FOR EACH SECTOR ID│
      └────────────────────┬─────────────────────┘
                           │
      ┌────────────────────┴─────────────────────┐
      │ OUTPUT POPULATION DISTRIBUTION DIAGRAM    │
      │              BY SECTOR                    ├── S204
      └────────────────────┬─────────────────────┘
                           │
                    ┌──────┴──────┐
                    (     END     )
                    └─────────────┘
```

36

*Fig.9*

```
        ╭─────────────────────────────╮
        │ WEIGHT CALCULATION PROCESSING │
        │ OF LOCATION REGISTRATION SIGNAL │
        │        FOR EACH USER          │
        ╰─────────────────────────────╯
                      │
  ┌───────────────────────────────────────┐
  │ EXTRACT LOCATION REGISTRATION SIGNALS  │
  │ IMMEDIATELY PRECEDING AND IMMEDIATELY  │~S202A
  │        FOLLOWING TARGET TIME           │
  └───────────────────────────────────────┘
                      │
  ┌───────────────────────────────────────┐
  │ CALCULATE A TIME DIFFERENCE BETWEEN TARGET TIME AND │
  │ IMMEDIATELY PRECEDING LOCATION REGISTRATION TIME,   │~S202B
  │ AND A TIME DIFFERENCE BETWEEN TARGET TIME AND       │
  │ IMMEDIATELY FOLLOWING LOCATION REGISTRATION TIME    │
  └───────────────────────────────────────┘
                      │
  ┌───────────────────────────────────────┐
  │ CALCULATE WEIGHTS OF IMMEDIATELY PRECEDING AND      │
  │ IMMEDIATELY FOLLOWING LOCATION REGISTRATION SIGNALS │~S202C
  │        BASED ON EACH TIME DIFFERENCE                │
  └───────────────────────────────────────┘
                      │
              ╭───────────────╮
              │    RETURN      │
              ╰───────────────╯
```

**Fig. 10**

METHOD FOR CALCULATING WEIGHTS

IMMEDIATELY PRECEDING LOCATION REGISTRATION SIGNAL

IMMEDIATELY FOLLOWING LOCATION REGISTRATION SIGNAL

TARGET TIME

(A)    m [MINUTES]    (B)    n [MINUTES]

$$\text{WEIGHT OF A} = \frac{n}{m+n}$$

$$\text{WEIGHT OF B} = \frac{m}{m+n}$$

Fig.11

## Fig.12

EP 2 600 302 A1

# Fig.13

10a

VISUALIZATION SOLUTION UNIT — 504

MOBILE DEMOGRAPHY UNIT — 503

500

PETA-MINING UNIT — 502

SOCIAL SENSOR UNIT — 501

EXCHANGE   EXCHANGE   EXCHANGE } 400

eNB eNB eNB eNB eNB eNB eNB eNB eNB eNB eNB } 250

100

## *Fig.14*

COMPLEMENTARY PROCESSING
OF LOCATION REGISTRATION SIGNAL
FOR EACH USER

EXTRACT LOCATION REGISTRATION SIGNALS
IMMEDIATELY PRECEDING AND IMMEDIATELY ⸺S102A
FOLLOWING TARGET TIME

GENERATE POINTS AT REGULAR INTERVALS
BETWEEN POINTS CORRESPONDING TO SECTORS SUBJECTED
TO LOCATION REGISTRATION IMMEDIATELY PRECEDING ⸺S102B
AND IMMEDIATELY FOLLOWING TARGET TIME

GENERATE VIRTUAL LOCATION REGISTRATION SIGNAL
FOR SECTOR IN WHICH A POINT CORRESPONDING ⸺S102D
TO TARGET TIME IS INCLUDED

RETURN

# *Fig.15*

<u>10</u>

**400**

**300**

**403**
STORAGE UNIT

**100** **200**

MOBILE STATION

BTS

**304**
SIGNAL-NUMBER MEASURING UNIT

**404**
LOCATION REGISTRATION SIGNAL PROCESSING UNIT

**303**
LOCATION REGISTRATION SIGNAL RECEIVER

**402**
CONVERTER

**100** **200**

MOBILE STATION

BTS

**302**
RNC COMMUNICATION CONTROLLER

RNC

**401**
EXCHANGE COMMUNICATION CONTROLLER

EXCHANGE

**600**

**605**
OUTPUT UNIT

**604**
POPULATION DISTRIBUTION CALCULATION UNIT

**603**
EXTRACTING UNIT

**602**

**607**
ATTRIBUTE INFORMATION HOLDING UNIT

HOLDING UNIT

**606**
TARGET TIME INPUT UNIT

**601**
INFORMATION ANALYSIS DEVICE COMMUNICATION CONTROLLER

INFORMATION ANALYSIS DEVICE

# *Fig.16*

```
        ┌─────────────────────────────────┐
        │    COMPLEMENTARY PROCESSING     │
        │ OF LOCATION REGISTRATION SIGNAL │
        │          FOR EACH USER          │
        └─────────────────────────────────┘
                        │
   ┌──────────────────────────────────────────┐
   │ EXTRACT LOCATION REGISTRATION SIGNALS    │
   │ IMMEDIATELY PRECEDING AND IMMEDIATELY    ├── S102A
   │      FOLLOWING TARGET TIME               │
   └──────────────────────────────────────────┘
                        │
   ┌──────────────────────────────────────────────────────────┐
   │ GENERATE POINTS BETWEEN POINTS CORRESPONDING             │
   │ TO SECTORS SUBJECTED TO LOCATION REGISTRATION            │
   │      IMMEDIATELY PRECEDING AND IMMEDIATELY               ├── S102BX
   │ FOLLOWING TARGET TIME BASED ON RATIO RELATED TO          │
   │ INTER-SECTOR RELATIVE RATIO OF INTRA-SECTOR MOVING VELOCITIES │
   └──────────────────────────────────────────────────────────┘
                        │
   ┌──────────────────────────────────────────┐
   │       GENERATE VIRTUAL LOCATION          │
   │ REGISTRATION SIGNAL FOR SECTOR IN WHICH  ├── S102C
   │      A GENERATED POINT IS INCLUDED       │
   └──────────────────────────────────────────┘
                        │
                 ┌──────────────┐
                 │    RETURN    │
                 └──────────────┘
```

## Fig.17

METHOD FOR GENERATING POINTS

| SECTOR 1 | SECTOR 2 | SECTOR 3 |

A —— X —— Y —— B

INTER-SECTOR RELATIVE RATIO OF INTRA-SECTOR MOVING VELOCITIES $=$

| SECTOR 1 | SECTOR 2 | SECTOR 3 |
|---|---|---|
| 1 | 2 | 3 |

⇓

POINTS ARE GENERATED BETWEEN POINTS A AND B SO THAT POINT INTERVALS ARE AS FOLLOWS. $=$

| A-to-X | X-to-Y | Y-to-B |
|---|---|---|
| 1 | 2 | 3 |

# Fig.18

COMPLEMENTARY PROCESSING
OF LOCATION REGISTRATION SIGNAL
FOR EACH USER

EXTRACT LOCATION REGISTRATION SIGNALS
IMMEDIATELY PRECEDING AND IMMEDIATELY
FOLLOWING TARGET TIME — S102A

GENERATE POINTS BETWEEN POINTS CORRESPONDING TO
SECTORS SUBJECTED TO LOCATION REGISTRATION
IMMEDIATELY PRECEDING AND IMMEDIATELY
FOLLOWING TARGET TIME BASED ON RATIO RELATED TO
INTER-SECTOR RELATIVE RATIO OF INTRA-SECTOR MOVING VELOCITIES — S102BX

GENERATE VIRTUAL LOCATION REGISTRATION
SIGNAL FOR SECTOR IN WHICH A POINT
CORRESPONDING TO TARGET TIME IS INCLUDED — S102D

RETURN

## Fig.19

(a)

D    E

12:00    12:05

TARGET SECTOR

ASSUMING THAT D-to-E
DISTANCE = 150 m,
150 m/(12:05-12:00)
= 30 m/min
= 1.8 km/h

(b)

C    P    D    E    Q    F

11:55    12:00    12:05    12:10

TARGET SECTOR

WITH THE ASSUMPTION OF A LINEAR MOTION
WITH CONSTANT VELOCITY BETWEEN C AND D,
A TIME WHEN ENTERING THE TARGET SECTOR
(A TIME WHEN PASSING THROUGH THE POINT P
ON THE BOUNDARY) IS DETERMINED TO BE 11:58.

SIMILARLY, A TIME WHEN LEAVING
THE TARGET SECTOR (A TIME WHEN PASSING
THROUGH THE POINT Q ON THE BOUNDARY)
IS DETERMINED TO BE 12:06.

ASSUMING THAT P-to-Q DISTANCE = 180 m,
180 m/(12:06-11:58)
= 22.5 m/min
= 1.35 km/h

EP 2 600 302 A1

# Fig.20

## METHOD FOR GENERATING POINTS

| | SECTOR 1 | SECTOR 2 | SECTOR 3 |
|---|---|---|---|

(A) ———— X ———— Y ———— (B)

INTER-SECTOR RELATIVE RATIO OF INTRA-SECTOR STAYING TIMES

| | SECTOR 1 | | SECTOR 2 | | SECTOR 3 |
|---|---|---|---|---|---|
| = | 2 | : | 3 | : | 4 |

POINTS ARE GENERATED BETWEEN POINTS A AND B SO THAT POINT INTERVALS ARE AS FOLLOWS.

| | A-to-X | | X-to-Y | | Y-to-B |
|---|---|---|---|---|---|
| = | 1/2 | : | 1/3 | : | 1/4 |
| | 6 | : | 4 | : | 3 |

EP 2 600 302 A1

# Fig.21

(a)

STAYING TIME
= 12:05-12:00
= 5 min

D    E
12:00    12:05

TARGET SECTOR

(b)

C    P    D    E    Q    F
11:55    12:00    12:05    12:10

TARGET SECTOR

WITH THE ASSUMPTION OF A LINEAR MOTION WITH
CONSTANT VELOCITY BETWEEN C AND D,
A TIME WHEN ENTERING THE TARGET SECTOR
(A TIME WHEN PASSING THROUGH THE POINT P
ON THE BOUNDARY) IS DETERMINED TO BE 11:58.

SIMILARLY, A TIME WHEN LEAVING THE TARGET
SECTOR (A TIME WHEN PASSING THROUGH
THE POINT Q ON THE BOUNDARY) IS DETERMINED
TO BE 12:06.

STAYING TIME
= 12:06-11:58
= 8 min

EP 2 600 302 A1

# Fig.22

Flowchart:

( WEIGHT CALCULATION PROCESSING IN STEP S202C IN FIG. 9 )

S301 — IS AT LEAST ONE OF FIRST TIME DIFFERENCE m AND SECOND TIME DIFFERENCE n LONGER THAN PERIOD t?

NO → S302 — WEIGHT OF IMMEDIATELY PRECEDING LOCATION REGISTRATION SIGNAL = $n/(m+n)$
WEIGHT OF IMMEDIATELY FOLLOWING LOCATION REGISTRATION SIGNAL = $m/(m+n)$

YES → S303 — WEIGHT OF LOCATION REGISTRATION SIGNAL CORRESPONDING TO TIME DIFFERENCE LONGER THAN PERIOD t IS SET TO BE 0

S304 — ARE BOTH FIRST TIME DIFFERENCE m AND SECOND TIME DIFFERENCE n LONGER THAN PERIOD t?

NO → S305A — WEIGHT OF LOCATION REGISTRATION SIGNAL CORRESPONDING TO TIME DIFFERENCE NOT LONGER THAN PERIOD t IS SET TO BE 1

YES → ( RETURN )

# Fig.23

USER α

30 min     60 min     TIME AXIS

AREA A
13:30     TARGET TIME
14:00     AREA B
15:00

LOCATION OF
USER α AT 14:00

IN THE FOURTH EMBODIMENT,
AREA A: WEIGHT = 1

IN THE FIFTH EMBODIMENT,
AREA A:WEIGHT = (54-30)/54 = 24/54

# Fig.24

WEIGHT CALCULATION
PROCESSING IN
STEP S202C IN FIG. 9

S301

IS AT LEAST
ONE OF FIRST TIME DIFFERENCE m
AND SECOND TIME DIFFERENCE n
LONGER THAN PERIOD t?

NO

YES — S303

WEIGHT OF LOCATION REGISTRATION SIGNAL
CORRESPONDING TO TIME DIFFERENCE
LONGER THAN PERIOD t IS SET TO BE 0

S302

WEIGHT OF IMMEDIATELY PRECEDING
LOCATION REGISTRATION SIGNAL = n/(m+n)

WEIGHT OF IMMEDIATELY FOLLOWING
LOCATION REGISTRATION SIGNAL = m/(m+n)

S304

YES

ARE BOTH FIRST TIME DIFFERENCE m
AND SECOND TIME DIFFERENCE n
LONGER THAN PERIOD t?

NO

WEIGHT OF LOCATION REGISTRATION SIGNAL
CORRESPONDING TO TIME DIFFERENCE
NOT LONGER THAN PERIOD t IS
(PERIOD t - TIME DIFFERENCE) / PERIOD t

S305B

RETURN

# Fig.25

PROCESSING OF STEPS S202
AND S203 IN FIG. 8

S401

FOR EACH USER,
EXTRACT IMMEDIATELY PRECEDING PRE-REMOVAL LOCATION REGISTRATION SIGNAL AND
IMMEDIATELY FOLLOWING PRE-REMOVAL LOCATION REGISTRATION SIGNAL
FROM LOCATION REGISTRATION SIGNAL BEFORE REMOVING
A LOCATION REGISTRATION SIGNAL BY LA CROSSING AND
EXTRACT IMMEDIATELY PRECEDING POST-REMOVAL LOCATION REGISTRATION SIGNAL AND
IMMEDIATELY FOLLOWING POST-REMOVAL LOCATION REGISTRATION SIGNAL
FROM LOCATION REGISTRATION SIGNAL AFTER REMOVING
A LOCATION REGISTRATION SIGNAL BY LA CROSSING

S402

FOR EACH USER,
CALCULATE A FIRST TIME DIFFERENCE m BETWEEN LOCATION REGISTRATION TIME OF
IMMEDIATELY PRECEDING PRE-REMOVAL LOCATION REGISTRATION SIGNAL AND TARGET TIME,
A SECOND TIME DIFFERENCE n BETWEEN LOCATION REGISTRATION TIME OF
IMMEDIATELY FOLLOWING PRE-REMOVAL LOCATION REGISTRATION SIGNAL AND TARGET TIME,
A THIRD TIME DIFFERENCE q BETWEEN LOCATION REGISTRATION TIME OF
IMMEDIATELY PRECEDING POST-REMOVAL LOCATION REGISTRATION SIGNAL AND TARGET TIME, AND
A FOURTH TIME DIFFERENCE r BETWEEN LOCATION REGISTRATION TIME OF IMMEDIATELY
FOLLOWING POST-REMOVAL LOCATION REGISTRATION SIGNAL AND TARGET TIME

S403

FOR EACH USER,
CALCULATE WEIGHT w1 OF IMMEDIATELY PRECEDING
PRE-REMOVAL LOCATION REGISTRATION SIGNAL,
WEIGHT w2 OF IMMEDIATELY FOLLOWING PRE-REMOVAL LOCATION REGISTRATION SIGNAL,
WEIGHT w3 OF IMMEDIATELY PRECEDING POST-REMOVAL LOCATION REGISTRATION SIGNAL, AND
WEIGHT w4 OF IMMEDIATELY FOLLOWING POST-REMOVAL LOCATION REGISTRATION SIGNAL

S404

BASED ON PROPORTIONAL DIVISION PARAMETER p, FOR EACH USER,
PROPORTIONALLY DIVIDE WEIGHTS OF IMMEDIATELY PRECEDING AND
IMMEDIATELY FOLLOWING PRE-REMOVAL LOCATION REGISTRATION SIGNALS AND
WEIGHTS OF IMMEDIATELY PRECEDING AND IMMEDIATELY FOLLOWING
POST-REMOVAL LOCATION REGISTRATION SIGNALS

S405

FOR ALL USERS TO BE TALLIED,
TALLY WEIGHTS OF PROPORTIONALLY DIVIDED IMMEDIATELY PRECEDING AND IMMEDIATELY
FOLLOWING PRE-REMOVAL LOCATION REGISTRATION SIGNALS AND
WEIGHTS OF PROPORTIONALLY DIVIDED IMMEDIATELY PRECEDING AND IMMEDIATELY FOLLOWING
POST-REMOVAL LOCATION REGISTRATION SIGNALS FOR EACH SECTOR ID

RETURN

# Fig.26

AREA B
(LA LOCATION
REGISTRATION)
13:30

30 min | 30 min | TIME AXIS

USER α ————————————————————————————————→

AREA A
(PERIODIC
LOCATION
REGISTRATION)
13:20

40 min | TARGET TIME
14:00

AREA C
(PERIODIC
LOCATION
REGISTRATION)
14:30

LOCATION
REGISTRATION
SIGNAL BY LA
CROSSING IS PRESENT

WEIGHT w1 OF IMMEDIATELY PRECEDING
PRE-REMOVAL LOCATION REGISTRATION SIGNAL
AREA B: 30/60=1/2
WEIGHT w2 OF IMMEDIATELY FOLLOWING
PRE-REMOVAL LOCATION REGISTRATION SIGNAL
AREA C: 30/60=1/2 } ←x

LOCATION
REGISTRATION
SIGNAL BY LA
CROSSING IS ABSENT

WEIGHT w3 OF IMMEDIATELY PRECEDING
POST-REMOVAL LOCATION REGISTRATION SIGNAL
AREA A: 30/70=3/7
WEIGHT w4 OF IMMEDIATELY FOLLOWING
POST-REMOVAL LOCATION REGISTRATION SIGNAL
AREA C: 40/70=4/7 } ←y

LOCATION OF
USER α AT 14:00 | $px+ (1-p)y$

$(0 < p < 1)$

WHEN p = 0.5

AREA B: 30/60=1/2
AREA C: 30/60=1/2 ×0.5

——————————————————————————

AREA A: 30/70=3/7 ×(1-0.5)
AREA C: 40/70=4/7

⟹

AREA A: 3/14
AREA B: 1/4
AREA C: 15/28

Fig.27

(a)

(c)

(b)

# Fig.28

A-1: 10m² → 5%     A-2: 50m² → 25%

A-3: 100m² → 50%

A-4: 40m² → 20%

# Fig.29

A-2: 25% → 200 PEOPLE

B-1: 80% →400 PEOPLE

C-4: 80% → 600 PEOPLE

200+400+600 = 1200 PEOPLE

# Fig.30

| OPERATION FORMS | GEOGRAPHICAL RELATIONS BETWEEN TOTALIZATION UNITS AND OUTPUT UNIT | CONVERSION COEFFICIENTS (AREA RATIOS) FROM TOTALIZATION UNITS TO OUTPUT UNIT Q | | ESTIMATED POPULATIONS IN RESPECTIVE TOTALIZATION UNITS |
|---|---|---|---|---|
| | OUTPUT UNIT Q | | | |
| OUTDOOR 2GHz/1.7GHz | A, B, C | A: 0.4, B: 0.1, C: 0.05 | | A: 100, B: 30, C: 100 |
| OUTDOOR 800MHz | D, E, F | D: 0.3, F: 0.3 | × | D: 10, F: 30 |
| INDOOR STATIONS (IMCS AND OTHERS) | J, K, L, M | L: 1.0 | | L: 10 |

ESTIMATED POPULATION IN OUTPUT UNIT Q    (40+3+5)+(3+9)+10=70 (people)

EP 2 600 302 A1

# Fig.31

| TARGET AREA | ESTIMATED POPULATION | MEN | WOMEN | 20 TO 24 YEARS OLD | 25 TO 29 YEARS OLD | RESIDENTS OF TOKYO | RESIDENTS OF KANAGAWA |
|---|---|---|---|---|---|---|---|
| SECTOR A | 614 PEOPLE | 294 PEOPLE | 320 PEOPLE | 58 PEOPLE | 50 PEOPLE | 320 PEOPLE | 190 PEOPLE |
| : | | | | | | | |
| : | | | | | | | |

EP 2 600 302 A1

**INTERNATIONAL SEARCH REPORT**

| International application No. |
| --- |
| PCT/JP2011/067497 |

A.   CLASSIFICATION OF SUBJECT MATTER
*G06Q50/00*(2006.01)i, *H04W60/00*(2009.01)i

According to International Patent Classification (IPC) or to both national classification and IPC

B.   FIELDS SEARCHED

Minimum documentation searched (classification system followed by classification symbols)
G06Q50/00, H04W60/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JP 2002-342557 A   (Nippon Telegraph and Telephone Corp.), 29 November 2002 (29.11.2002), entire text; fig. 1 to 4 (Family: none) | 1,2,12,13, 14,19-25 |
| Y | JP 4364936 B1   (Softbank BB Corp.), 28 August 2009 (28.08.2009), entire text; fig. 1 to 13 (Family: none) | 1,2,12,13, 14,19-25 |
| Y | JP 2000-171251 A   (Asia Air Survey Co., Ltd.), 23 June 2000 (23.06.2000), entire text; fig. 1 to 11 (Family: none) | 1,2,12,13, 14,19-25 |

☒  Further documents are listed in the continuation of Box C.      ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 September, 2011 (15.09.11) | 27 September, 2011 (27.09.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/067497

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-21069 A  (Alpine Electronics, Inc.), 31 January 2008 (31.01.2008), entire text; fig. 1 to 5 (Family: none) | 1,2,12,13, 14,19-25 |
| A | JP 2003-122877 A  (Oki Electric Industry Co., Ltd.), 25 April 2003 (25.04.2003), entire text; fig. 1 to 7 (Family: none) | 1-25 |
| A | JP 2002-259581 A  (NEC Custommax Ltd.), 12 September 2002 (12.09.2002), entire text; fig. 1 to 5 (Family: none) | 1-25 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003044969 A
- JP 2009092225 A
- JP 2010055424 W